(19) Europäisches Patentamt
European Patent Office
Office européen des brevets

(11) **EP 0 847 617 B1**

(12) **EUROPÄISCHE PATENTSCHRIFT**

(45) Veröffentlichungstag und Bekanntmachung des Hinweises auf die Patenterteilung:
**24.01.2001 Patentblatt 2001/04**

(51) Int Cl.$^7$: **H02P 21/00**

(21) Anmeldenummer: **96930071.4**

(22) Anmeldetag: **21.08.1996**

(86) Internationale Anmeldenummer:
**PCT/EP96/03688**

(87) Internationale Veröffentlichungsnummer:
**WO 97/08820 (06.03.1997 Gazette 1997/11)**

(54) **VERFAHREN UND VORRICHTUNG ZUR KORREKTUR EINER FLUSSRICHTUNG EINES MODELLFLUSSES EINER GEBERLOSEN, FELDORIENTIERT BETRIEBENEN DREHFELDMASCHINE BIS ZUR FREQUENZ NULL**

PROCESS AND DEVICE FOR CORRECTING THE FLOW DIRECTION OF THE MODEL FLOW OF A SENSOR-FREE, FIELD-ORIENTED ROTATING MAGNETIC FIELD MACHINE DOWN TO ZERO FREQUENCY

PROCEDE ET DISPOSITIF DE CORRECTION DE LA DIRECTION DE FLUX D'UN MODELE DE FLUX D'UN MOTEUR A CHAMP ROTATIF, COMMANDE SANS CAPTEUR ET PAR ORIENTATION DE CHAMP JUSQU'A UNE FREQUENCE ZERO

(84) Benannte Vertragsstaaten:
**AT CH DE FR GB IT LI**

(30) Priorität: **31.08.1995 DE 19532149**

(43) Veröffentlichungstag der Anmeldung:
**17.06.1998 Patentblatt 1998/25**

(73) Patentinhaber: **SIEMENS AKTIENGESELLSCHAFT**
**80333 München (DE)**

(72) Erfinder:
• **BLASCHKE, Felix**
**D-91056 Erlangen (DE)**

• **VANDENPUT, Andrè, Jean, Adolf**
**B-3500 Hasselt (BE)**

(56) Entgegenhaltungen:
**EP-A- 0 161 616          EP-A- 0 228 535**

• **JANSEN P L ET AL: "TRANSDUCERLESS POSITION AND VELOCITY ESTIMATION IN INDUCTION AND SALIENT AC MACHINES" 1.März 1995 , IEEE TRANSACTIONS ON INDUSTRY APPLICATIONS, VOL. 31, NR. 2, PAGE(S) 240 - 247 XP000513097 siehe Zusammenfassung**

**Beschreibung**

Die Erfindung bezieht sich auf ein Verfahren zur Korrektur einer Flußrichtung eines mittels eines Maschinenmodells in Abhängigkeit zweier Zustandsvektoren einer geberlosen, feldorientiert betriebenen Drehfeldmaschine gebildeten Modellflußvektors bis zur Frequenz Null, wobei je ein Sollwert für eine feld- und drehmomentbildende Stromkomponente des Ständerstromvektors der Drehfeldmaschine vorgegeben wird und wobei dem Sollwert für die feldbildende Stromkomponente ein Stromtestsignal mit zeitlich nicht konstantem Verlauf aufgeschaltet wird und auf eine Vorrichtung zur Durchführung des Verfahrens.

Für eine Regelung oder Steuerung einer Drehfeldmaschine ist es vorteilhaft, den Ständerstrom in Abhängigkeit von der jeweiligen Richtung des die Maschine durchsetzenden magnetischen Flusses so zu steuern, daß durch die flußparallele Komponente des Maschinenstromes eine gewünschte Stärke des Feldes und durch die flußsenkrechte Komponente des Maschinenstromes das Drehmoment oder die Drehzahl eingestellt wird. Für einen derartigen feldorientierten Betrieb der Drehfeldmaschine ist daher ein Stellglied für den Ständerstrom und eine dem Ständerstrom-Stellglied vorgeschaltete Steuereinrichtung erforderlich, wobei die Steuereinrichtung eine Information über die Richtung des Flusses erhalten muß. Diese Information kann von einem Maschinenmodell geliefert werden. das als elektrisches Modell der Drehfeldmaschine aus Betriebsdaten die Flußrichtung eines nachgebildeten Modellflusses bestimmt. Wird nun je ein Sollwert für die feldbildende (flußparallele) und die drehmomentbildende (flußsenkrechte) Komponente des Maschinen-Ständerstromes vorgegeben (feldorientierte Sollwerte), so kann durch die Steuereinrichtung der Maschinenstrom auf einen aus den beiden Sollwerten entsprechend, der Flußrichtung des Modellflusses zusammengesetzten, ständerorientierten Ständerstromvektor geregelt oder gesteuert werden.

Für die Durchführung der Regelalgorithmen bei dynamisch hochwertigen feldorientierten Regelkonzepten ergibt sich bei tiefen Drehzahlen der Asynchronmaschine die Notwendigkeit eines mechanischen Gebers zur Erfassung der Rotorlage oder Rotorgeschwindigkeit. Asynchronmaschinen können ohne Lagegeber und Tachogenerator dynamisch hochwertig betrieben werden, wenn die Drehzahl einen gewissen Minimalwert überschreitet, so daß aus der induzierten Spannung der magnetische Fluß aus elektrischen Größen berechnet werden kann. Im tiefen Drehzahlbereich ist dies bisher noch nicht gelungen. Es ist daher das Ziel vieler Forschungsaktivitäten, den mechanischen Geber durch mathematische Modelle und/oder durch Ausnutzung physikalischer Effekte zu ersetzen.

Bei einer geberlosen, feldorientiert betriebenen Asynchronmaschine wird als Maschinenmodell das sogenannte Spannungsmodell benutzt, das aus den Zustandsgrößen Maschinenstrom und Ständerspannung der Asynchronmaschine den magnetischen Fluß dieser Maschine in Betrag und Phase berechnet. Das Spannungsmodell berechnet den Fluß als Integral der EMK, d.h. als Integral der Spannung abzüglich der ohmschen und induktiven Spannungsabfälle im Ständer. Das Spannungsmodell liefert aber bei niedrigen Drehzahlen nur ein ungenaues Signal, wobei eine Fehlparametrierung des Ständerwiderstandes, Gleichspannungsanteile, die als Meßfehler bei den Spannungsmessungen auftreten, und Integrationsfehler der technischen Integratoren zu Fehlbestimmungen führen. Daher ist ein feldorientierter Betrieb mit einem Spannungsmodell nur bei höheren Frequenzen möglich. Außerdem muß für die Integratoren der EMK die Integrationskonstante durch Vorgabe eines Startwertes gesetzt werden.

Anstelle der Flußrichtung kann als Richtungsvektor in manchen Fällen auch die Achse des EMK-Vektors verwendet werden, die gegenüber der Feldachse im stationären Fall um 90° el. gedreht ist. Dann kann zwar die Integration entfallen, jedoch ist auch hier ein hinreichend genau geregelter Betrieb bei niedrigen Frequenzen nicht möglich. Vielmehr wird eine andere Möglichkeit zur Erfassung des Richtungsvektors erforderlich.

Ein sogenanntes Strommodell bildet die Vorgänge, die im Läufer zur Ausbildung des Flusses führen, aus Momentanwerten von Strom und Läuferlage nach. Hierzu wird aber ein mechanischer Geber zur Bestimmung der Läuferlage benötigt. Dieser Aufwand wird zwar durch einen inkrementalen Drehgeber oder einen anderen nichtlagecodierten Geber, wie z.B. einen reinen Drehzahlmesser, verringert, jedoch muß dann bei Stillstand bzw. Langsamlauf der Maschine die Läuferachse auf andere Weise erfaßt (geortet) werden. Diese Ortung ist selbst bei lagecodierten mechanischen Gebern häufig aufwendig.

Das Problem der Läuferortung tritt also insbesondere bei Drehfeldmaschinen auf, die im Läufer ausgeprägte Vorzugsrichtungen aufweisen, wie z.B. auch Reluktanzmaschinen. Es ist bei Maschinen, die eine eigene Erregerwicklung besitzen, dadurch lösbar, daß diese Erregerwicklung noch im Stillstand erregt wird und aus der im Ständer induzierten Spannung der sich aufbauende Fluß, der dann in Richtung der Läuferachse zeigt, errechnet wird. Diese Möglichkeit entfällt aber bei Permanenterregung und löst auch nicht die bei niedrigen Drehzahlen auftretenden Schwierigkeiten.

Für den feldorientierten Betrieb von Asynchronmaschinen scheidet bei niedrigen Drehzahlen das Spannungsmodell zur Lagebestimmung des Flusses aus, während das Strommodell die gleichen, mit der Läuferortung verknüpften Probleme aufweist. Auch hier erscheint daher häufig ein aufwendiger mechanischer Geber erforderlich.

In der Beschreibungseinleitung der internationalen Patentanmeldung WO92/19038 werden mehrere Lösungen für das Problem der Läuferflußortung bei Asynchronmaschinen, Synchronmaschinen und Reluktanzmaschinen ausführlich vorgestellt. Die als Erfindung in der WO92/19038 angegebene Lösung besteht darin, daß die Drehfeldmaschine in ihrer Ausbildung als Asynchronmaschine vor Beginn der Messung aufmagnetisiert wird und daß die Rückwirkung von an die Asynchronmaschine abgesetzten Meßsignalen gemessen wird, wobei die Meßsignale vom Umrichter generierte Spannungssprünge sind, die Stromänderungen bewirken, welche gemessen und einem Rechner zugeführt werden, der eine komplexe Kenngröße ermittelt, welche dem Quotienten aus Statorspannungsraumzeiger und zeitlicher Änderung des Statorstromraumzeigers proportional ist, wobei die Richtung des Spannungsraumzeigers aus dem bekannten Umrichter-Ansteuerzustand hervorgeht, im folgenden als komplexe Kenngröße bezeichnet, und den magnetischen Fluß berechnet, wobei die komplexe Kenngröße sowohl in ihrem Realteil als auch in ihrem Imaginärteil mit dem doppelten Wert des magnetischen Flußwinkels näherungsweise sinusförmig schwankt und aus Real- und Imaginärteil den doppelten Wert des gesuchten magnetischen Flußwinkels nach bekannten Methoden der komplexen Rechnung ermittelt.

Bei diesem Verfahren ist kein mechanischer Geber notwendig und das Verfahren ist unempfindlich gegenüber Unsicherheiten im Parameter Rotorwiderstand, wobei auf Spannungsmessungen verzichtet werden kann. Außerdem wird der ohnehin vorhandene speisende Umrichter als Meßsignalgenerator eingesetzt.

In der genannten internationalen Patentanmeldung WO92/19038 wird auf die Dissertation "Die permanenterregte umrichtergespeiste Synchronmaschine ohne Polradgeber als drehzahlgeregelter Antrieb" von H. Vogelmann (Universität Karlsruhe, Deutschland, 1986) hingewiesen, die sich mit einem Verfahren zur Ortung der Polradlage befaßt. Bei diesem Verfahren wird ein mittels eines Umrichters erzeugter, relativ hochfrequenter Strom als Prüfsignal dem eigentlichen Nutzsignal überlagert. Der Grundgedanke dabei ist, daß ein in einer gewissen (Raumzeiger-)Richtung aufgeschaltetes elektrisches Wechselsignal aufgrund der unterschiedlichen Induktivitäten in Längs- und Querachse im allgemeinen auch in der orthogonalen Richtung eine Reaktion hervorruft. Nur für den Fall, daß das Wechselsignal genau in der Rotorlängs- bzw. -querrichtung aufgebracht wird, tritt eine derartige Verkopplung nicht auf. Dabei ergibt sich ein Kriterium, ob das Signal in die gesuchte ausgezeichnete Richtung appliziert wird oder nicht. Eine Voraussetzung zur Erreichung exakter Meßergebnisse ist eine permanentmagneterregte Synchronmaschine mit Schenkelpolcharakter, also mit ungleichen Induktivitäten in Längs- und Querrichtung, wie etwa bei flußkonzentrierten Anordnungen.

Aus der EP 0 228 535 A1 ist ein Verfahren und eine Vorrichtung zur Bestimmung des Flußwinkels einer Drehfeldmaschine bzw. zum lagerorientierten Betrieb der Maschine bekannt. Bei diesem Verfahren wird einer elektrischen Zustandsgröße des Ständerwicklungssystems ein hochfrequenter Anteil eingeprägt. Unter den elektrischen Zustandsgrößen des Ständerwicklungssystems sind dabei die Ströme und Spannungen in den einzelnen Ständerspulen verstanden und die Achsen der Spulen, denen der hochfrequente Anteil eingeprägt wird, bestimmen die Richtung des eingeprägten hochfrequenten Anteils. Es zeigt sich, daß z.B. bei einem eingeprägten Hochfrequenzstrom in einer oder mehreren Ständerspulen auch in der Spannung dieser Spulen und in den Strömen und Spannungen der anderen Spulen hochfrequente Anteile auftreten, deren Amplitude vom Differenzwinkel zwischen der Flußachse bzw. der Richtung des eingeprägten Anteils abhängt. Daher wird aus einem Zustandssignal, das eine andere Zustandsgröße des Ständerwicklungssystems abbildet, die Amplitude des hochfrequenten Anteils erfaßt; der gesuchte Richtungswinkel wird aus der Abhängigkeit der erfaßten Amplitude von der vorgegebenen Richtung des eingeprägten Hochfrequenzteils bestimmt.

Gemäß diesem Verfahren ist nun vorgesehen, dem Ständerstrom mittels eines gegenüber der Frequenz des Bezugsvektors hochfrequenten Zusatz-Sollvektors einen hochfrequenten Anteil zu überlagern. Die Überlagerung kann durch Vektoraddition zum feldorientierten Sollvektor oder zu dem entsprechenden, in das ständerorientierte Koordinatensystem übertragenen Vektor oder auf eine andere, mathematisch äquivalente Weise erfolgen. Folglich enthält auch der Steuervektor einen entsprechend hochfrequenten Anteil, der dem Ständerstrom über den Stromrichter eingeprägt wird. Handelt es sich bei dem Zusatzvektor um einen Vektor mit rasch veränderlicher Richtung, so ist auch die Steuergröße entsprechend rasch veränderlich. Durch die Aufprägung eines hochfrequenten Anteils im Ständerstrom oder in der Ständerspannung werden in den Ständerwicklungen dadurch hochfrequente Spannungsanteile (bzw. Stromanteile) eingekoppelt, deren Hüllkurven der Lage der Feld- oder Läuferachse zugeordnet werden. Diese Hüllkurven werden durch geeignete Mittel den Komponenten des Richtungsvektors zugeordnet. Zur Bildung des Richtungsvektors ist ein Flußrechner vorgesehen, der aus elektrischen Größen der Maschine die ständerbezogenen Komponenten eines den Fluß beschreibenden Modellvektors berechnet.

Dieses Verfahren geht von der Beobachtung aus, daß ein in eine der Ständerspulen eingeprägter hochfrequenter Anteil der einen Zustandsgröße einen Hochfrequenzanteil der anderen Zustandsgröße der gleichen Spule und Hochfrequenzanteile der Zustandsgrößen der anderen Spulen induziert. Die Hochfrequenzanteile hängen von der Lage der Läufer- bzw. Feldachse ab. Als Zusatz-Sollvektor wird eine sinusförmige Schwingung von etwa 250 Hz verwendet. Mittels dieses Verfahrens ist ein feldorientierter Betrieb einer Synchronmaschine möglich.

Aus der EP 0 071 847 B1 ist ein Verfahren und eine Vorrichtung zum Bestimmen der Läuferzeitkonstante einer feldorientierten Drehfeldmaschine bekannt. Bei diesem Verfahren wird dem Sollwert für die feldbildende (flußparallele) Komponente eine Störgröße mit zeitlich nicht konstantem Verlauf aufgeschaltet, wird der zeitliche Verlauf des Istwertes einer von der anderen Komponente (drehmomentbildende bzw. flußsenkrechte Komponente des Maschinenstromes) bestimmten Betriebsgröße (Drehmoment bzw. Drehzahl) erfaßt, wird eine Korrelationsgröße für die Korrelation im zeitlichen Verlauf der Störgröße und der erfaßten Betriebsgröße bestimmt und wird der eingegebene Parameter für die Läuferzeitkonstante in Abhängigkeit von der Korrelationsgröße verändert, bis die Korrelationsgröße praktisch Null wird. Als zu erfassende Betriebsgröße eignet sich die Läuferbeschleunigung oder eine daraus abgeleitete Größe (Drehmoment oder Drehzahl) der Drehfeldmaschine. Die Störgröße weist bevorzugt einen periodischen, statistischen oder pseudostatistischen zeitlichen Verlauf auf. Diese Störgrößenaufschaltung am Sollwert für die feldbildende Stromkomponente wirkt sich bei exakter Feldorientierung nicht auf die drehmomentbildende Komponente aus. Wird für die Störgröße ein zeitlicher Verlauf gewählt, der sich deutlich genug von dem zeitlichen Verlauf der Stromsollwerte unterscheidet, z.B. eine wesentlich höhere Frequenz aufweist, so können die dadurch entstehenden höherfrequenten Überlagerungen eindeutig der mangelnden Entkopplung von Fluß- und Drehmoment, d.h. der Fehleinstellung der Läuferzeitkonstante, zugeordnet werden. Als Störgröße eignet sich somit ein sinusförmiges Signal.

Der Erfindung liegt nun die Aufgabe zugrunde, ein Verfahren und eine Vorrichtung zur Korrektur einer Flußrichtung eines mittels eines Maschinenmodells in Abhängigkeit zweier Zustandsvektoren einer geberlosen, feldorientiert betriebenen Drehfeldmaschine gebildeten Modellflußvektors bis zur Frequenz Null anzugeben.

Diese Aufgabe wird erfindungsgemäß mit den kennzeichnenden Merkmalen des Anspruchs 1 bzw. 4 gelöst.

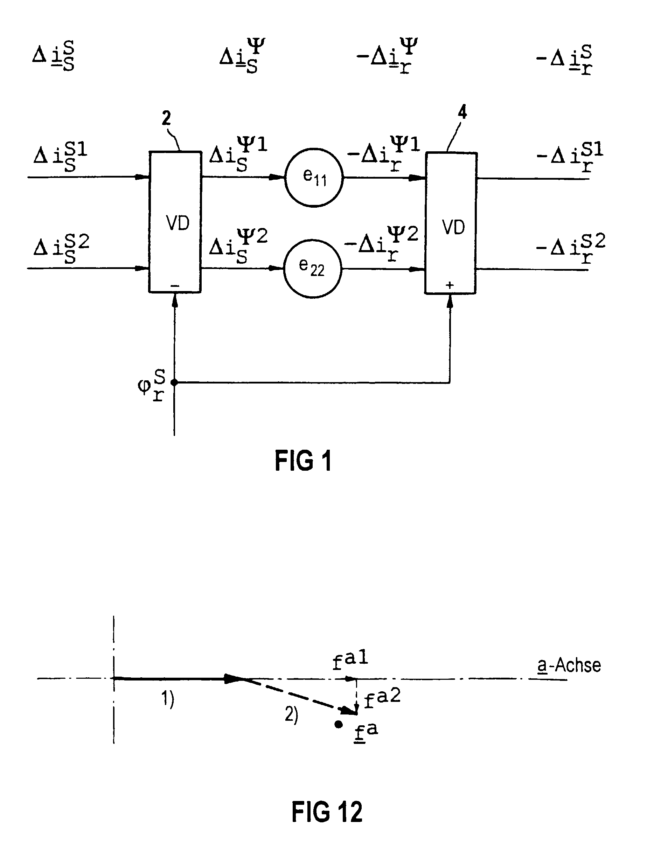

Dem Verfahren liegt ein Effekt zugrunde, der im Bereich der magnetischen Sättigung wirksam ist. Der Effekt beruht auf der besonderen Art und Weise, mit welcher in diesem Bereich Bewegungen des Statorstromvektors auf dazugehörige Bewegungen des Rotorstromvektors übertragen werden. Die genannten Übertragungseigenschaften können aus den Gleichungen einer stromgespeisten Asynchronmaschine unter Berücksichtigung der Sättigung, also streng nach der Theorie der Drehfeldmaschine, hergeleitet werden. Für genügend schnelle und kleine Bewegungen des Statorstromvektors folgt daraus ein sehr einfacher Zusammenhang, der in Figur 1 dargestellt ist. Aus dieser Figur 1 erkennt man, in welcher Weise solche sogenannten Testbewegungen (gekennzeichnet durch $\Delta$) des Statorstromvektors auf den Rotorstromvektor übertragen werden. Der im Statorkoordinatensystem vorgegebene Stromvektor $\Delta \underline{i}_S^S$ wird mittels des Vektordrehers 2 in das Flußkoordinatensystem transformiert. Dazu steht am Winkeleingang die Flußrichtung des Flußvektors der Drehfeldmaschine an. Aus den dabei entstehenden Koordinaten $\Delta i_S^{\Psi 1}$ und $\Delta i_S^{\Psi 2}$ entstehen über die Faktoren $e_{11}$ und $e_{22}$ die negativen Rotorstromkoordinaten $-\Delta i_r^{\Psi 1}$ und $-\Delta i_r^{\Psi 2}$. Nach Rücktransformation ins Statorkoordinatensystem mittels eines weiteren Vektordrehers 4 erhält man den durch $\Delta \underline{i}_S^S$ verursachten Rotorstromvektor $-\Delta \underline{i}_r^S$. Die beschriebene Übertragung erfolgt praktisch ohne Zeitverzögerung. Das Bemerkenswerte an dieser Struktur ist die Tatsache, daß die Übertragungsfaktoren $e_{11}$ und $e_{22}$ im gesättigten Bereich verschieden groß sind, wobei in diesem Bereich immer $e_{11} < e_{22}$ ist. Das bedeutet, daß bei Sättigung die Stromübertragung parallel zum Rotorfluß mit geringerer Verstärkung erfolgt als senkrecht dazu. Aufgrund dieses Effektes ist es grundsätzlich möglich, die Richtung des Rotorflusses zu erkennen.

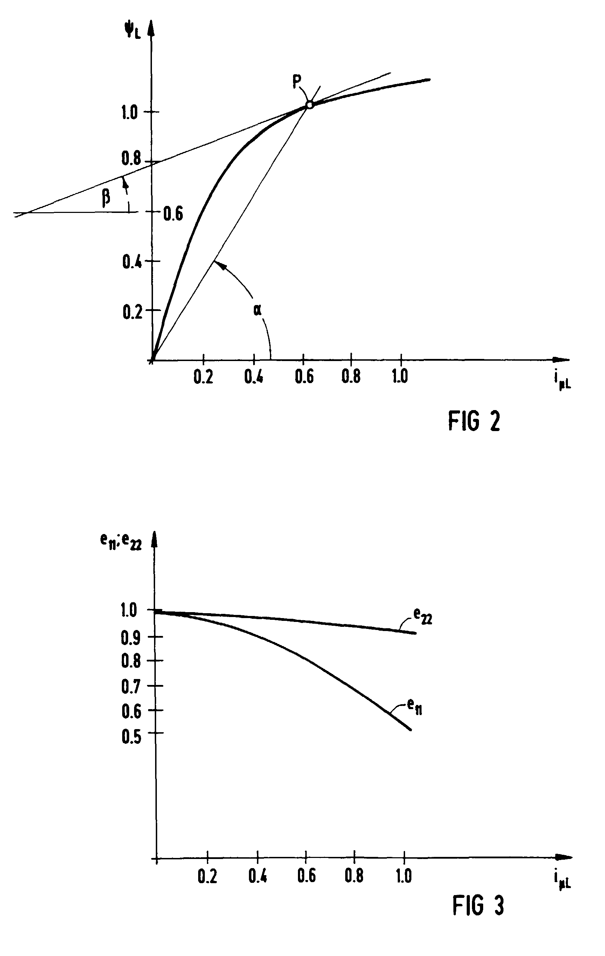

Im folgenden wird gezeigt, wie die genannten Faktoren $e_{11}$ und $e_{22}$ vom Sättigungszustand der Maschine abhängen. In der Figur 2 ist zu diesem Zweck der Zusammenhang zwischen den p.u.-Größen Luftspaltfluß $\Psi_L$ und Magnetisierungsstrom $i_{\mu L}$ dargestellt. Jeder Arbeitspunkt P ist durch zwei charakteristische Werte gekennzeichnet: Zum einen durch den Winkel $\alpha$ des Ortsvektors, zum anderen durch den Winkel $\beta$ der Tangente im betreffenden Arbeitspunkt P. Die Faktoren $e_{11}$ und $e_{22}$ hängen eng mit diesen beiden Winkeln zusammen. Es ist

$$e_{11} \approx \frac{1}{1 + l_{\sigma r} \cdot \dfrac{1}{tg\beta}} \tag{1}$$

$$e_{22} \approx \frac{1}{1 + l_{\sigma r} \cdot \dfrac{1}{tg\alpha}} \tag{2}$$

Unterschiedliche Übertragungsfaktoren $e_{11}$ und $e_{22}$ treten demnach immer dann auf, wenn

$$tg\beta \neq tg\alpha \tag{3}$$

Und dies ist immer im gesättigten Gebiet gegeben. Die Größe des Unterschiedes der Faktoren hängt neben $tg\alpha$ und $tg\beta$ noch von der Streuinduktivität $l_{\sigma r}$ ab. Für einen üblichen Wert von $l_{\sigma r} = 0{,}1$ ist der Verlauf von $e_{11}$ und $e_{22}$ in Abhängigkeit vom Sättigungsgrad in der Figur 3 aufgetragen. Man erkennt, daß für den gezeichneten Arbeitspunkt P der Unterschied schon recht deutlich ist, nämlich

$$e_{11} \approx 0{,}8$$

$$e_{22} \approx 0.95 \qquad (4)$$

Da das erfindungsgemäße Verfahren ohne Eingriff in die Drehfeldmaschine ermöglicht werden soll, wird die Information über den Vektor des Rotorstromes aus dem Vektor der Statorspannung gewonnen. Mittels dieses Verfahrens erhält man ein Signal, das eine eindeutige Auskunft darüber abgibt, ob die geschätzte Flußachse mit der wahren Flußachse übereinstimmt bzw. rechts oder links von ihr liegt. Dieses Signal wird so lange zur Nachführung des Modellflußvektors verwendet, bis das Signal zu Null wird. Genau dann stimmt die geschätzte Flußachse mit der wahren Flußachse überein. Da als Maschinenmodell das sogenannte Spannungsmodell verwendet wird, wird das erfindungsgemäße Verfahren nur auf kleinen Frequenzen bis Frequenz Null benutzt, um die Ungenauigkeit des Spannungsmodells in diesem Bereich zu korrigieren. Oberhalb von kleinen Frequenzen entfällt eine Korrektur der vom Spannungsmodell berechneten Flußlage.

Vorteilhafte Ausgestaltungen des Verfahrens bzw. der Vorrichtung zur Durchführung dieses Verfahrens sind den Unteransprüchen 2 und 3 bzw. 5 bis 10 zu entnehmen.

Zur weiteren Erläuterung der Erfindung wird auf die Zeichnung Bezug genommen, in der ein Ausführungsbeispiel einer Vorrichtung zur Durchführung des erfindungsgemäßen Verfahrens schematisch veranschaulicht ist.

| | |
|---|---|
| Figur 1 | zeigt ein Ersatzschaltbild eines Stromübertragungsgliedes für kleine und schnelle Bewegungen des Statorstromvektors, in |
| Figur 2 | ist der Zusammenhang zwischen dem Luftspaltfluß und dem Magnetisierungsstrom einer Drehfeldmaschine dargestellt, wobei in der |
| Figur 3 | die Übertragungsfaktoren $e_{11}$ und $e_{22}$ für eine Streuinduktivität $l_{\sigma r}=0,1$ in einem Diagramm über dem Magnetisierungsstrom dargestellt sind, die |
| Figur 4 | zeigt ein Blockschaltbild für die Auswertung des beschriebenen Sättigungseffektes zur Flußwinkelbestimmung, die |
| Figur 5 | zeigt in einem Vektordiagramm die Bildung eines Stromtestsignals, wobei die |
| Figur 6 | in einem Vektordiagramm die Bahn des durch das Stromtestsignal verursachten Vektors des Rotorstromes beschreibt, die |
| Figur 7 | stellt diesen Zusammenhang zwischen einem Verdrehungswinkel $\gamma$ und der Abweichung der geschätzten Flußlage von der wahren Flußlage, wobei die |
| Figur 8 | den Korrelationsvektor in einem auf den Testleitvektor bezogenen Koordinatensystem darstellt, die |
| Figur 9 | zeigt ein Schaltbild einer Vorrichtung zur Durchführung des erfindungsgemäßen Verfahrens, wobei in der |
| Figur 10 | eine Ausführungsform einer Einrichtung zur Erzeugung von Spannungskomponenten mit zeitlich nicht konstantem Verlauf gemäß der Figur 9 dargestellt ist, und in der |
| Figur 11 | eine Ausführungsform einer Einrichtung zur Bildung der Komponenten eines Korrelationsvektors gemäß Figur 9 dargestellt ist, die |
| Figuren 12 bis 14 | zeigen jeweils in einem testleitvektorbezogenen Koordinatensystem Teilkomponenten des Korrelationsvektors, die |
| Figur 15 | zeigt den Statorstromvektor im Rotorfluß-koordinatensystem bei Belastung im Sättigungsbereich ohne und mit Statorstrom-Testschwingung, wogegen die |
| Figur 16 | den Statorstromvektor mit Statorstrom-Testschwingung im Statorkoordinatensystem darstellt, die |
| Figur 17 | zeigt jeweils in einem Diagramm über der Zeit t die feld- und drehmomentbildenden, ständerbezogenen Stromkomponenten, das elektrische Drehmoment und die Drehzahl bei einem Reversierbetrieb und die |
| Figur 18 | zeigt jeweils in einem Diagramm über der Zeit t die feld- und drehmomentbildenden, ständerbezogenen Stromkomponenten, das elektrische Drehmoment und die Drehzahl bei einer Frequenz Null unter Last beim Übergang vom Reversierbetrieb auf Gleichstrombetrieb, wobei in der |
| Figur 19 | der stationäre Gleichstrombetrieb als Fortsetzung der Diagramme der Figur 18 dargestellt ist. |

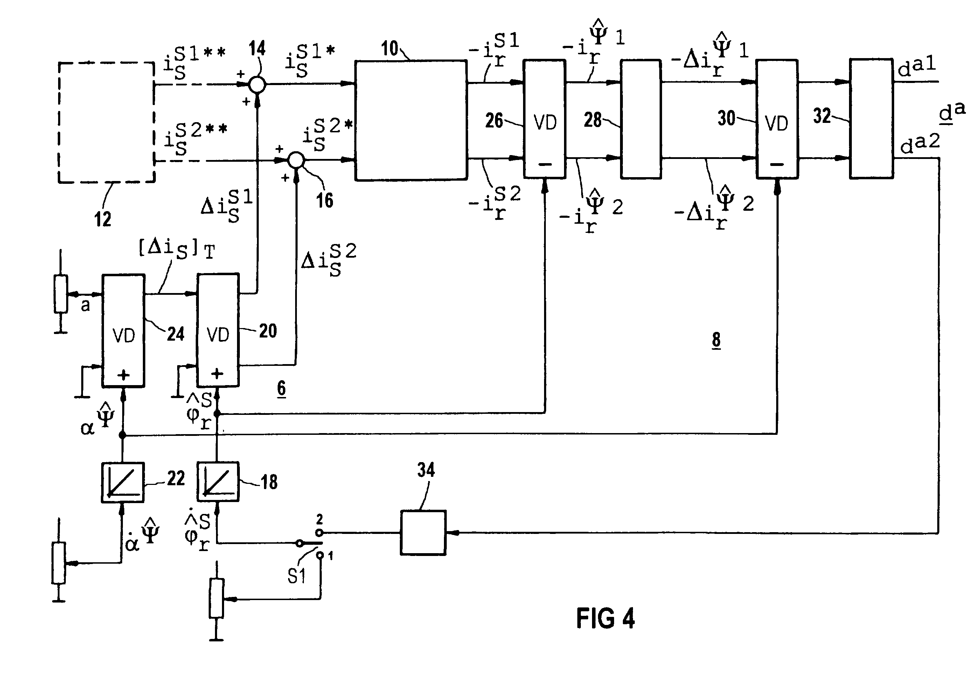

Eine grundsätzliche Möglichkeit der Auswertung des beschriebenen Sättigungseffektes zur Flußwinkelbestimmung ist durch eine Schaltungsanordnung gemäß Figur 4 dargestellt. Sie besteht aus einem Vorgabeteil 6 und einem Ausgabeteil 8. Eine stromgesteuerte Drehfeldmaschine 10 wird von einer beliebig gestalteten Steuereinrichtung 12 gespeist. Diese Steuereinrichtung 12 erzeugt Sollwerte für die Stromkomponente $i_S^{S1**}$ und für eine Stromkompo-

nente $i_S^{S2**}$, die jeweils mit einem Addierglied 14 bzw. 16 verbunden sind. Diesen gebildeten Stromkomponenten $i_S^{S1**}$ und $i_S^{S2**}$ wird ein Teststromvektor $\Delta i_S^{S*}$ additiv überlagert. Zur Erzeugung dieses Teststromvektors $\Delta i_S^{S*}$ wird ein Schätzwert $\hat{\varphi}_r^S$ für die Rotorflußachse angesetzt, der hier von einem vorerst mit konstanter Frequenz gespeisten Winkelintegrator 18 erzeugt wird (S1 in Stellung 1). Ein vom Winkelschätzwert $\hat{\varphi}_r^S$ gespeister Vektordreher 20 wird an seinem ersten Eingang mit einem zeitlich veränderlichen Stromtestsignal $[\Delta i_S]_T$ beaufschlagt. Der auf diese Weise erzeugte Teststromvektor $\Delta i_S^{S*}$ führt nur translatorische Bewegungen parallel zur Flußschätzachse $\hat{\varphi}_r^S$ aus. Das Stromtestsignal $[\Delta i_S]_T$ wird von einem zweiten Winkelintegrator 22 und einem Vektordreher 24 gebildet. Der Winkelintegrator 22 wird mit einer konstanten Testfrequenz $\hat{\alpha}^{\hat{\Psi}}$, der Vektordreher 24 an seinem ersten Eingang mit einer konstanten Testamplitude a gespeist. Auf diese Weise entsteht das Stromtestsignal als cos-förmige Schwingung von der Form

$$[\Delta i_S]_T = a \cdot \cos \overset{\bullet}{\alpha}{}^{\hat{\Psi}} t \qquad\qquad (5)$$

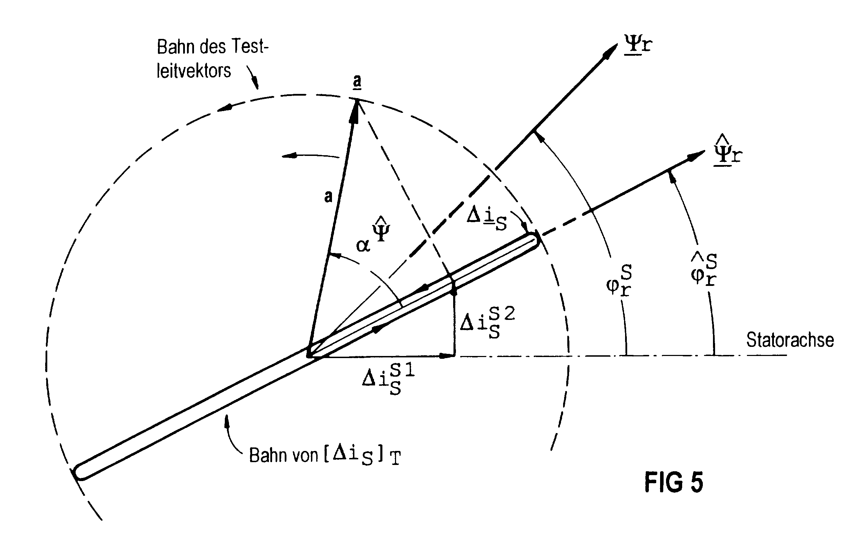

In Figur 5 sind die beschriebenen Merkmale in einem Vektordiagramm zusammengefaßt dargestellt. Das Stromtestsignal $[\Delta i_S]_T$ kann man als von einem mit Testfrequenz $\overset{\bullet}{\alpha}{}^{\hat{\Psi}}$ rotierenden Testleitvektor $\underline{a}$ gewonnene Projektion in die geschätzte Flußachse, die den Winkel $\hat{\varphi}_r^S$ zur Statorachse einnimmt, deuten. Diese Projektion durchläuft bei einem Umlauf des Testleitvektors $\underline{a}$ die durch Fettdruck gekennzeichnete Bahn; auf diese Weise entsteht ein translatorisch in der Richtung der Flußschätzachse $\hat{\varphi}_r^S$ pulsierender Testvektor $\Delta \underline{i_S}$.

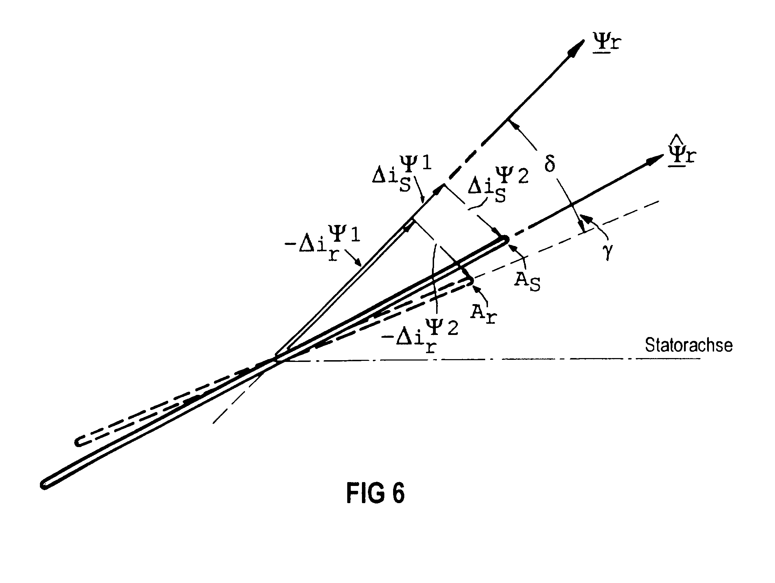

In Figur 6 wird gezeigt, welche Bahn der durch den genannten Testvektor $\Delta \underline{i_S}$ verursachte Vektor $-\Delta \underline{i_r}$ des Rotorstromes beschreibt. Wir greifen dazu den Anfangspunkt $A_S$ einer solchen Testschwingung heraus. Gemäß dem in der Figur 1 dargestellten Übertragungsgesetz müssen die feldorientierten Koordinaten vom Testvektor $\Delta \underline{i_S}$, nämlich $\Delta i_S^{\Psi 1}$, $\Delta i_S^{\Psi 2}$ gebildet und dieselben mit den Übertragungsfaktoren $e_{11}$ bzw. $e_{22}$ multipliziert werden. Mit den Werten von der Gleichung (4) erhält man die in Figur 6 eingetragenen Koordinaten $-\Delta i_r^{\Psi 1}$, $-\Delta i_r^{\Psi 2}$ des Anfangspunktes $A_r$ der Rotorstromschwingung. Auf diese Weise erhält man auch die gesamte Schwingungsbahn vom Vektor $-\Delta \underline{i_r}$ des Rotorstromes (durch unterbrochenen Fettdruck gekennzeichnet).

Man erkennt, daß die Schwingungsbahn vom Vektor $-\Delta \underline{i_r}$ des Rotorstromes gegenüber der Schwingungsbahn vom Testvektor $\Delta \underline{i_S}$ verdreht ist, und zwar um den Winkel $\gamma$. Die Verdrehung hat ihre Ursache darin, daß die feldorientierten Koordinaten $\Delta i_S^{\Psi 1}$, $\Delta i_S^{\Psi 2}$ des Testvektors $\Delta \underline{i_S}$ unterschiedlich verkürzt werden, sie ist also ein unmittelbarer Ausdruck des Stromübertragungsgesetzes der gesättigten Maschine gemäß der Figur 1.

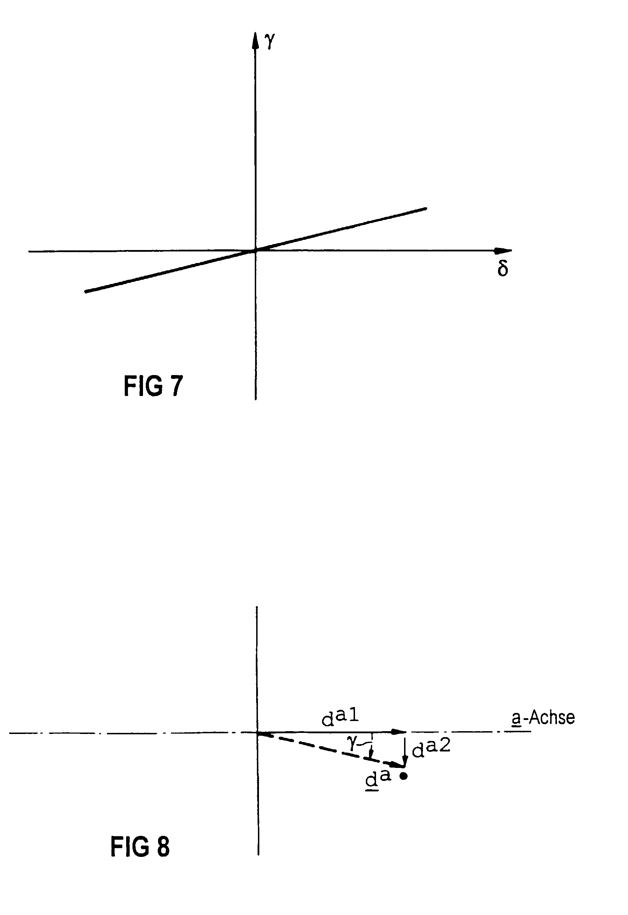

Ganz wesentlich bei diesem Sachverhalt ist nun die Erkenntnis, daß der Verdrehungswinkel $\gamma$ davon abhängig ist, welchen Winkel $\delta$ die Flußachse $\varphi_r^S$ zur Flußschätzachse $\hat{\varphi}_r^S$ einnimmt. Man kann sich leicht davon überzeugen, daß der Verdrehungswinkel $\gamma$ immer entgegengesetzt zu $\delta$ gerichtet ist und darüberhinaus Null wird, wenn $\delta=0$ ist; mit den in Figur 6 eingezeichneten Zählpfeilen ergibt sich der in Figur 7 dargestellte Zusammenhang. Der Verdrehungswinkel $\gamma$ gibt also eine eindeutige Auskunft darüber, ob die geschätzte Flußachse $\hat{\varphi}_r^S$ mit der wahren Flußachse $\varphi_r^S$ übereinstimmt bzw. rechts oder links von ihr liegt.

Die Ermittlung dieses Verdrehungswinkels $\gamma$ ist im Auswertungsteil 8 der Schaltungsanordnung nach Figur 4 dargestellt. Die Auswertung erfolgt in folgenden Schritten:

a) Es werden die Komponenten $-i_r^{S1}$ und $-i_r^{S2}$ des ständerorientierten Vektors $-\underline{i_r^S}$ des negativen Rotorstromes im Statorkoordinatensystem gemessen.

b) Dieser Vektor $-\underline{i_r^S}$ wird mittels des Vektordrehers 26 in das durch die geschätzte Flußachse $\hat{\varphi}_r^S$ bestimmte Koordinatensystem transformiert, man erhält also so die Komponenten $-i_r^{\hat{\Psi} 1}$ und $-i_r^{\hat{\Psi} 2}$ des feldorientierten Vektors $-\underline{i_r^{\hat{\Psi}}}$ des negativen Rotorstromes im durch die geschätzte Flußachse $\hat{\varphi}_r^S$ bestimmten Koordinatensystem.

c) Durch ein sogenanntes Abhebefilter 28 (welches bezüglich der Testfrequenz phasenkompensiert ist) wird aus den genannten Signalen $-i_r^{\hat{\Psi} 1}$ und $-i_r^{\hat{\Psi} 2}$ der Testvektor $-\Delta \underline{i_r^{\hat{\Psi}}}$ mit den Komponenten $-\Delta i_r^{\hat{\Psi} 1}$ und $-\Delta i_r^{\hat{\Psi} 2}$ herauspräpariert. Dieser mit der Drehfrequenz $\overset{\bullet}{\alpha}{}^{\hat{\Psi}}$ des Testleitvektors $\underline{a}$ pulsierende Vektor kann durch die Summe zweier Vektoren konstanter Länge beschrieben werden, deren erster mit $\overset{\bullet}{\alpha}{}^{\hat{\Psi}}$ (Mitsystem) und deren zweiter mit $-\overset{\bullet}{\alpha}{}^{\hat{\Psi}}$ (Gegensystem) umläuft.

d) Aus dem translatorischen pulsierenden Testvektor $-\Delta \underline{i_r^{\hat{\Psi}}}$ wird durch eine Koordinatentransformation in die Achse $\alpha^{\hat{\Psi}}$ des Testleitvektors $\underline{a}$ mittels eines Vektordrehers 30 und anschließender Tiefpaßfilterung durch ein Tiefpaßglied 32 das Mitsystem ermittelt. Der so entstehende Vektor $\underline{d^a}$ (Figur 8) stellt eine ruhende Größe (in Figur 8 durch einen Punkt gekennzeichnet) dar. Es zeigt sich nun, daß dieser Vektor $\underline{d^a}$ gegenüber der Koordinatenachse a um den Verschiebungswinkel $\gamma$ verdreht ist (Figur 8). Die achssenkrechte Komponente $d^{a2}$ vom Vektor $\underline{d^a}$ stellt somit ein Maß für den Winkel $\gamma$ dar; damit ist diese wichtige Größe ermittelt.

Durch eine Regelschaltung 34, bei der das so gewonnene Signal als Istwert verwendet wird und die auf den Eingang des den Winkel $\varphi_r^S$ erzeugenden Winkelintegrators 18 wirkt (S1 in Stellung 2), wird nun der geschätzte Flußwinkel $\varphi_r^S$ so lange verändert, bis der Verdrehungswinkel 7 gleich Null geworden ist. Damit ist $\varphi_r^S$ an $\varphi_r^S$ herangeführt, gleicht also im abgeglichenen Zustand dem wahren Flußwinkel, womit das Problem der Flußwinkelerfassung grundsätzlich gelöst ist.

Es ist eine Besonderheit des beschriebenen Verfahrens, daß die dabei benutzten Testbewegungen des Statorstromvektors im abgeglichenen Zustand, sobald also die Testachse gefunden ist, parallel zum Rotorfluß verlaufen und dadurch keinen Einfluß auf das elektrische Drehmoment haben; der Testvorgang bleibt dadurch für den Betreiber praktisch unbemerkt.

Die bisher beschriebene Grundform des Meßverfahrens stellt natürlich noch nicht die Lösung des eingangs beschriebenen Problems dar, da hierbei der Vektor des Rotorstromes gemessen werden muß und diese Messung nicht ohne Eingriff in die Maschine möglich ist. Die Grundform des Meßverfahrens sollte aber auch nur die grundsätzliche Wirkungsweise des Verfahrens erläutern.

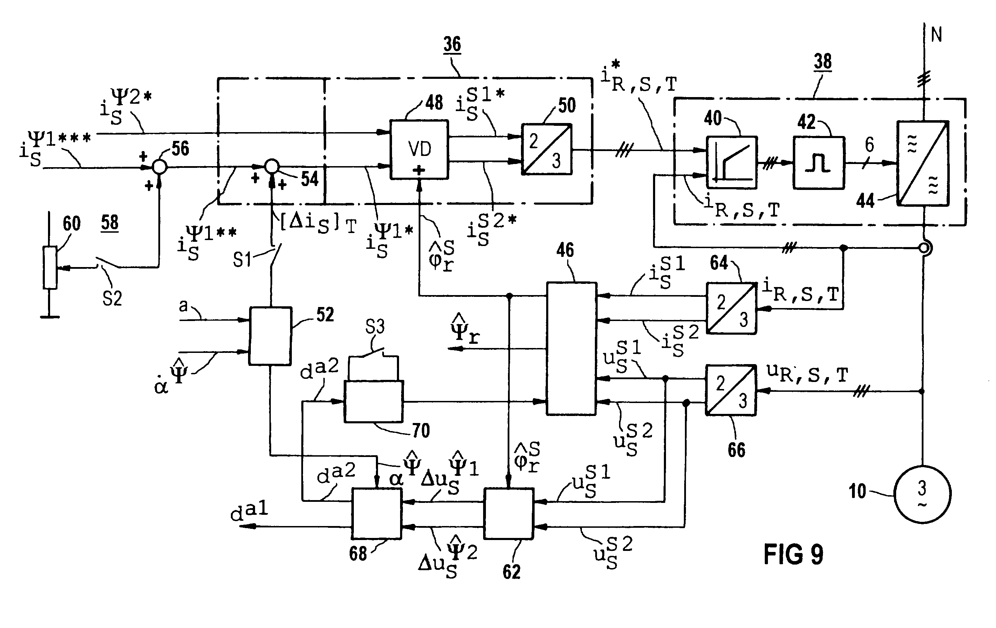

In der Praxis wird die so wichtige Information über dem Vektor des Rotorstromes aus dem Vektor der Statorspannung gewonnen. Ein Schaltbild einer Vorrichtung zur Durchführung des erfindungsgemäßen Verfahrens ist in Figur 9 näher dargestellt. Als Drehfeldmaschine sei eine Asynchronmaschine 10 betrachtet. Für die Steuerung dieser Asynchronmaschine 10 ist an einem Eingang einer Steuereinrichtung 36 ein Sollwert $i_S^{\Psi 1**}$ für die flußbildende Komponente des Ständerstromes vorgegeben, mit der der Fluß der Drehfeldmaschine 10 konstant gehalten werden kann. An einem weiteren Eingang dieser Steuereinrichtung 36 ist der Sollwert $i_S^{\Psi 2**}$ für die flußsenkrechte Ständerstromkomponente vorgegeben, der z.B. von einem überlagerten nicht näher dargestellten Drehzahlregler gebildet wird. Ferner ist vorgesehen: Ein Stellglied 38 steuert den Strom der Drehfeldmaschine 10, indem z.B. für jeden Phasenstrom einer dreiphasigen Drehfeldmaschine 10 ein Stromregler 40 aus von einer Steuereinrichtung 36 gelieferten Sollwerten $i_{R,S,T}^*$ und über eine Istwertleitung eingespeisten Istwerten $i_{R,S,T}$ für den Ständerstrom entsprechende Steuerspannungen bildet, die in einem Steuerglied 42 zu entsprechenden Zündimpulsen für einen zwischen einem Wechselstromnetz N und der Drehfeldmaschine 10 angeordneten Umrichter 44 verarbeitet werden.

Ein Maschinenmodell 46, hier ein sogenanntes Spannungsmodell, berechnet in Abhängigkeit der kartesischen Komponenten $i_S^{S1}$ und $i_S^{S2}$ des Ständestromvektors $\underline{i}_S$ und der kartesischen Komponenten $u_S^{S1}$ und $u_S^{S2}$ des Ständerspannungsvektors $\underline{u}_S$ einen Modellwert für den nachgebildeten Fluß der Drehfeldmaschine. Dieser Fluß kann z.B. als entsprechender Vektor $\underline{\Psi}_r$ durch seinen Betrag $\Psi_r$ und einen Winkel $\varphi_r^S$ berechnet werden, wobei für die Durchführung des Verfahrens lediglich der Winkel $\varphi_r^S$ benötigt wird.

Die Steuereinrichtung 36, die dem Ständerstrom-Stellglied 38 vorgeschaltet ist, benutzt an den Eingängen eingegebene Sollwerte für die flußparallele und flußsenkrechte Komponente $i_S^{\Psi 1**}$ und $i_S^{\Psi 2*}$ des Ständerstromes sowie den FlußrichtungsModellwert $\varphi_r^S$, um die Eingabegröße für das Ständerstrom-Stellglied 38 zu bilden. Hierzu kann z. B. ein Vektordreher 48 vorgesehen sein, der die feldorientiert vorgegebenen Komponenten des Soll-Ständerstromes in ständerbezogene, ortsfeste Koordinaten umrechnet $i_S^{S1*}$ und $i_S^{S2*}$, d.h. eine Drehung des Bezugssystems um den eingegebenen Flußrichtungs-Modellwert $\varphi_r^S$ durchführt. Ein Koordinatenwandler 50 bildet aus den beiden ständerbezogenen kartesischen Komponenten $i_S^{S1*}$ und $i_S^{S1*}$ drei Sollwerte $i_{R,S,T}^*$, die entsprechend den Richtungen der an die drei Umrichterausgänge angeschlossenen Ständerwicklungen durch Vektoraddition den Ständerstrom-Sollvektor ergeben.

Ein Generator 52 erzeugt ein Stromtestsignal $[\Delta i_S]_T$ mit zeitlich nicht konstantem Verlauf, das dem Sollwert für die feldbildende Stromkomponente $i_S^{\Psi 1**}$ überlagert ist. Diese Überlagerung wird mittels eines Addierers 54 vollzogen. Dem Generator 52 wird die Amplitude a und die Frequenz $\overset{\Psi}{a}$ zugeführt. In der Verbindung vom Addierglied 54 zum Generator 52 ist ein Schalter S1 eingefügt.

Der Sollwert für die feldbildende Stromkomponente $i_S^{\Psi 1**}$ steht an einem Ausgang eines weiteren Addiergliedes 56 an, an dessen Eingängen ein Sollwert für die feldbildende Stromkomponente $i_S^{\Psi 1***}$ ansteht und eine Stromanhebevorrichtung 58 angeschlossen sind. Diese Stromanhebevorrichtung 58 weist eine Einrichtung 60 zur Spannungsteilung, beispielsweise ein Potentiometer 60, und einen Schalter S2 auf. Mittels dieses Schalters S2 wird ein einstellbarer Stromwert dem Sollwert für die feldbildende Stromkomponente $i_S^{\Psi 1***}$ derart aufaddiert, daß die Drehfeldmaschine 10 im Sättigungsbereich betrieben wird. Mit Schließen des Schalters S2 der Stromanhebevorrichtung 58 wird ebenfalls der Schalter S1 geschlossen, daß das vom Generator 52 generierte Stromtestsignal $[\Delta i_S]_T$ dem angehobenen Sollwert der feldbildenden Stromkomponente $i_S^{\Psi 1**}$ aufaddiert werden kann.

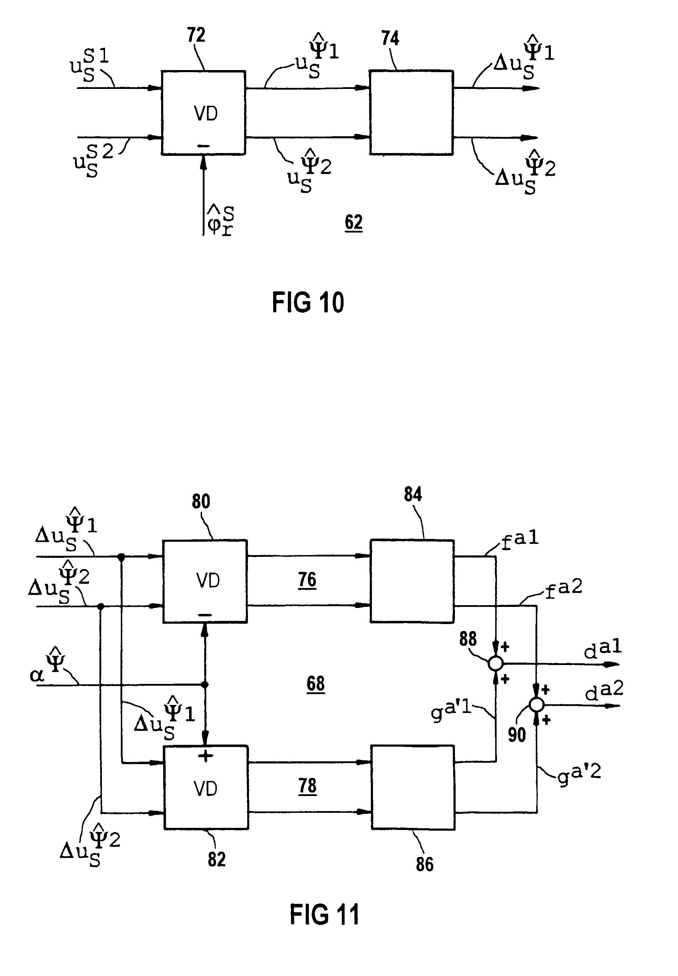

Wie bereits erwähnt, wird mittels des Maschinenmodells 46 aus dem ermittelten Zustandsvektor Statorstrom $\underline{i}_S$ und dem ermittelten Steuervektor Statorspannung $\underline{u}_S$ ein Modellwert für den nachgebildeten Fluß $\Psi_r$ der Drehfeldmaschine errechnet, wobei dieser Fluß $\Psi_r$ als entsprechender Vektor $\underline{\Psi}_r$ durch seinen Betrag $\Psi_r$ und einen Winkel $\varphi_r^S$ angegeben wird. Diese Flußrichtung $\varphi_r^S$ wird einerseits dem Vektordreher 48 der Steuereinrichtung 36 und andererseits einer Einrichtung 62 zur Erzeugung von Spannungskomponenten $\Delta u_S^{\overset{\Psi}{S}1}$ und $\Delta u_S^{\overset{\Psi}{S}2}$, die nur mehr Anteile mit zeitlich nicht konstantem Verlauf enthalten, zugeführt. Zur Bildung des Zustandsvektors Statorstrom $\underline{i}_S$ und des Steuervektors Statorspannung $\underline{u}_S$ werden ermittelte Istwerte der Phasenströme $i_{R,S,T}$ und Klemmspannungen $u_{R,S,T}$ jeweils einem Koordinatenwandler 64 und 66 zugeführt. Diese Koordinatenwandler 64 und 66 wandeln jeweils ein dreiphasiges System in ein orthogonales zweiphasiges System um. Die orthogonalen Spannungskomponenten $u_S^{S1}$ und $u_S^{S2}$ des Zustandsvektors $\underline{u}_S$ werden ebenfalls der Einrichtung 62 zugeführt. Ein Ausführungsbeispiel der Einrichtung 62 ist in der Figur 10 näher dargestellt. An den Ausgängen dieser Einrichtung 62 stehen Spannungskomponente $_{\Delta u_S^{\hat{\Psi}}}1$ und $_{\Delta u_S^{\hat{\Psi}}}2$ an, die nur mehr Anteile mit zeitlich nicht konstantem Verlauf enthalten, die durch das Stromtestsignal $[\Delta i_S]_T$ verursacht worden sind. Diese Spannungskomponenten $_{\Delta u_S^{\hat{\Psi}}}1$ und $_{\Delta u_S^{\hat{\Psi}}}2$ werden einer Einrichtung 68 zur Bildung der Komponenten $d^{a1}$ und $d^{a2}$ eines Korrelationsvektors $\underline{d}^a$ zugeführt. Ein Ausgang dieser Einrichtung 68, an dem die achssenkrechte Komponente $d^{a2}$ ansteht, ist über eine Nachführung 70 mit dem Maschinenmodell 46 verbunden. Die Nachführung 70 kann mittels eines Schalters S3 durchgeschaltet (eingeschaltet) werden. Eine Ausführungsform der Einrichtung 68 ist in der Figur 11 näher dargestellt.

Die Figur 10 zeigt eine Ausführungsform für die Einrichtung 62 zur Erzeugung von Spannungskomponenten $_{\Delta u_S^{\hat{\Psi}}}1$ und $_{\Delta u_S^{\hat{\Psi}}}2$ gemäß Figur 9. Diese Einrichtung 62 besteht aus einem eingangsseitigen Vektordreher 72 und aus einem ausgangsseitigen Filter 74. Die beiden Ausgänge des Vektordrehers 72 sind mit den beiden Eingängen des Filters 74 elektrisch leitend verknüpft. An den Eingängen des Vektordrehers 72 stehen die orthogonalen Spannungskomponenten $u_S^{S1}$ und $u_S^{S2}$ des Zustandsvektors Statorspannung $\underline{u}_S$ der Drehfeldmaschine 10, die mittels des Koordinatenwandlers 66 aus den Istwerten $u_{R,S,T}$ der Klemmspannung der Drehfeldmaschine 10 gebildet sind. Am Winkeleingang des Vektordrehers 72 steht die geschätzte Flußrichtung $\varphi_r^S$ des Modellwertes $\underline{\Psi}_r$ an. Mittels des Vektordrehers 72 werden die orthogonalen ständerorientierten Spannungskomponenten $u_S^{S1}$ und $u_S^{S2}$ in das flußbezogene Koordinatensystem transformiert, deren eine orthogonale Achse mit der Richtung des Modellwertes $\underline{\Psi}_r$ des Maschinenflußvektors $\underline{\Psi}_r$ zusammenfällt. Dadurch erhält man die feldorientierten Spannungskomponenten $u_S^{\hat{\Psi}}1$ und $u_S^{\hat{\Psi}}2$, die einen Gleichanteil und einen vom Stromtestsignal $[\Delta i_S]_T$ verursachten Wechselanteil aufweisen. Diese feldorientierten Spannungskomponenten $u_S^{\hat{\Psi}}1$ und $u_S^{\hat{\Psi}}2$ werden mittels des Filters 74 phasenrichtig gefiltert, unter anderem angehoben (d.h. den Gleichanteil entfernt), so daß an den Ausgängen des Filters 74 die Spannungskomponenten $_{\Delta u_S^{\hat{\Psi}}}$ und $_{\Delta u_S^{\hat{\Psi}}}2$ anstehen, die nur mehr Anteile mit zeitlich nicht konstantem Verlauf enthalten; sie sind durch das Stromtestsignal $[\Delta i_S]_T$ verursacht. Für den am Ausgang des Filters 74 anstehenden Spannungsvektor $_{\Delta u_S^{\hat{\Psi}}}$ kann folgende Näherungsgleichung angegeben werden:

$$\Delta \underline{u}_S^{\hat{\Psi}} \approx \underbrace{\Delta \underline{i}_S^{\hat{\Psi}} \cdot r_S}_{I} + \underbrace{\left[ -\Delta \underline{i}_r^{\hat{\Psi}} \right] \cdot r_r}_{II} + \underbrace{\Delta \dot{\underline{i}}_S^{\hat{\Psi}} \cdot l_{\sigma S}}_{III} + \underbrace{\left[ -\Delta \dot{\underline{i}}_r^{\hat{\Psi}} \right] \cdot l_{\sigma r}}_{IV} \qquad (6)$$

Diese Näherung gilt, entsprechend der Näherung von Figur 1, wenn die Testfrequenz genügend hoch ist; darüberhinaus darf die Betriebsfrequenz $\dot{\varphi}_r^S$ des zu messenden Flußwinkels $\varphi_r^S$ bestimmte Werte nicht übersteigen. Die Näherung ist also vor allem für den Niedrigst-Frequenzbereich geeignet.

In der Figur 11 ist eine Ausführungsform für die Einrichtung 68 zur Bildung der Komponenten $d^{a1}$ und $d^{a2}$ eines Korrelationsvektors $\underline{d}^a$ dargestellt. Gemäß der Figur 9 ist diese Einrichtung 68 eingangsseitig mit den Ausgängen der Einrichtung 62 verbunden. Diese Einrichtung 68 besteht aus zwei Kanälen 76 und 78 für ein Mit- und ein Gegensystem. Die beiden Kanäle 76 und 78 sind identisch aufgebaut. Der Kanal 76 bzw. 78 weist eingangsseitig einen Vektordreher 80 bzw. 82 auf und ausgangsseitig ein Filter 84 bzw. 86, das dem Vektordreher 80 bzw. 82 nachgeschaltet ist. Die Ausgänge dieser beiden Kanäle 76 und 78 sind komponentenweise mittels eines Addiergliedes 88 und 90 miteinander verknüpft. An den Ausgängen dieser beiden Addierglieder 88 und 90 stehen die Komponenten $d^{a1}$ und $d^{a2}$ des Korrelationsvektors $\underline{d}^a$ an. Die Winkeleingänge der Vektordreher 80 und 82 sind mit einem Winkelausgang des Generators 52 verknüpft, an dem die Lage $\alpha^{\hat{\Psi}}$ des Testleitvektors $\underline{a}$ ansteht.

Der Spannungsvektor gemäß Gleichung (6) besteht aus vier Bestandteilen. Es handelt sich im einzelnen um die ohmschen und streuinduktiven Spannungsabfälle von $_{\Delta \underline{i}_S^{\hat{\Psi}}}$ und $-_{\Delta \underline{i}_r^{\hat{\Psi}}}$. Im Bestandteil II der Gleichung (6) finden wir den in der Grundform auftretenden Term mit einem Proportionalitätsfaktor versehen wieder. Wenn die Bestandteile I, III und VI zu Null werden, könnte die Struktur der Grundform unverändert übernommen werden; dies ist in Figur 11 durch den Vektordreher 80 und den Filter 84 gegeben, wobei hier der Vektor $\underline{f}^a$ und insbesondere die Komponente $f^{a2}$ entsteht. Das Nullwerden der Bestandteile I, III und IV der Gleichung (6) könnte durch kompensierende Aufschaltung auf den Vektor der Statorspannung $\underline{u}_S$ erreicht werden. In der vorliegenden Ausgestaltung wird eine solche Kompensation, die eine Kenntnis der entsprechenden Maschinenparameter nötig machen würde, jedoch nicht vorgenommen; vielmehr wird der Einfluß der genannten Bestandteile durch eine Erweiterung der Schaltungsanordnung unwirksam gemacht.

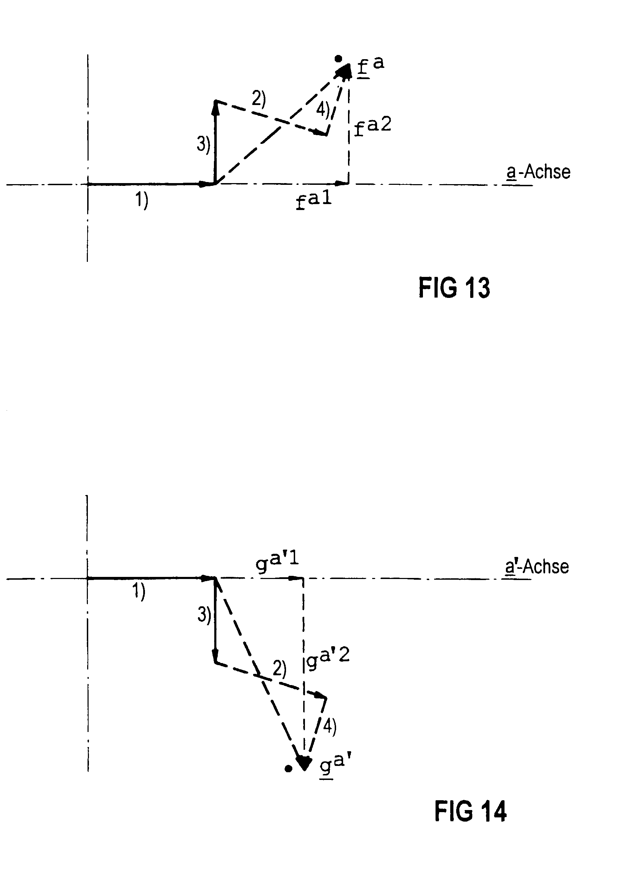

Gegen den Bestandteil I von der Gleichung (6) muß man sogar gar nichts tun. Es zeigt sich nämlich, daß der

mitlaufende Vektor von $\Delta i_S$ nach seiner Transformation in das Koordinatensystem des Testleitvektors a immer einen horizontal liegenden Vektor ergibt, so daß die Summe von Bestandteil I und Bestandteil II in der in Figur 12 gezeigten Weise in das Koordinatensystem des Testleitvektors a abgebildet wird. Die relevante zweite Koordinate des Ergebnisses am Ausgang des Filters 84 wird also durch den Bestandteil I der Gleichung (6) gar nicht verändert.

Hingegen verändern die Bestandteile III und IV der Gleichung (6) das Ergebnis am Ausgang des Filters 84 enorm, da zu den Vektoren von Figur 12 aufgrund von induktiven Streuspannungen noch je ein senkrecht auf dem bisher stehenden Vektor hinzukommt, so daß das Ergebnis bis zur Unbrauchbarkeit verfälscht wird (Figur 13). Gegen diese Verfälschung gibt es aber ein einfaches Mittel. Transformiert man nämlich, wie in Figur 11 mittels des Vektordrehers 82 und des Filters 86 durchgeführt, den gesamten Spannungsvektor $\Delta \hat{u}_S^a$ zusätzlich in die a'-Achse von einem Testleitvektor a', der flußbezogenen Spiegelung des Testleitvektors $\underline{a}$, so erhält man das Gegensystem von $\Delta \hat{u}_S^a$ bzw. seiner Bestandteile I bis IV. Man stellt dabei fest, daß bei dieser Transformation die ohmschen Anteile in gleicher Weise, wie das in Figur 13 der Fall ist, abgebildet werden, die streuinduktiven Anteile sich jedoch in die jeweils andere Richtung erstrecken, wie es in Figur 14 dargestellt ist. Der gesamte so entstehende Vektor wird mit $\underline{g}^{a'}$ bezeichnet.

Die Summe der Vektoren $\underline{f}^a$ und $\underline{g}^{a'}$ enthält dann wieder nur mehr die Bestandteile I und II der Gleichung (6), und zwar jeweils zweimal, während sich die Bestandteile III und IV der Gleichung (6), wie man aus den Figuren 13 und 14 ersehen kann, kompensieren. Insgesamt entsteht an den in der Figur 11 angeordneten Summenausgängen ein Vektorbild entsprechend der Figur 12 von doppelter Größe. Durch die hier besprochene Meßanordnung kann somit lediglich unter Verwendung von Statorspannungen (und Statorströmen zur Stromeinprägung) der Flußwinkel $\varphi_r^S$ bei kleinen Frequenzen und insbesondere bei Frequenz Null ermittelt werden.

Für die einwandfreie Funktion des beschriebenen Verfahrens ist es nötig, die Maschine im Sättigungsbereich zu betreiben. Schon aus Verlustgründen ist es empfehlenswert, diesen Betrieb nur, wenn unbedingt nötig, zu fahren. Außerdem würde bei höheren Frequenzen die Spannung unter Umständen unzulässig hohe Werte annehmen. Deshalb wurde das hier beschriebene Verfahren als Korrekturverfahren bezeichnet, mit der Aufgabe, ein vorhandenes Maschinenmodell im unteren Frequenzbereich zu unterstützen bzw. zu ersetzen. In diesem Sinne kann man voraussetzen, daß ein Maschinenmodell 46 zur Feldorientierung der in Figur 9 dargestellten Asynchronmaschine 10 bereits existiert und einen Großteil des Frequenzbereiches im Alleingang zufriedenstellend abdeckt. In diesem Zusammenhang erscheint es sinnvoll, als geschätzte Flußachse $\hat{\varphi}_r^S$ statt des Ausganges des Winkelintegrators 18 der Figur 4 den Ausgang des Maschinenmodells 46 der Figur 9 zu verwenden und den Regler 34 der Figur 4 in geeigneter Weise als Nachführung des Maschinenmodells 46 zu verwenden, sobald dies erforderlich wird. Die Anhebung des Magnetisierungsstromes und die Einschaltung der Maschinenmodell-Nachführung 70, durch die Schalter S2 und S3 angedeutet, wird dabei in Abhängigkeit von der Frequenz $\dot{\hat{\varphi}}_r^S$ vorgenommen. Gleichzeitig mit dem Schließen der Schalter S2 und S3 wird die Testschwingung über S1 aufgeschaltet.

Im Zusammenhang mit der Gleichung (6) wurde erwähnt, daß diese Näherung nur für kleine Betriebsfrequenzen des zu messenden Flusses genügend genau ist. Bei höheren Betriebsfrequenzen tritt in der Gleichung (6) noch je ein rotatorisches, von der Frequenz $\dot{\hat{\varphi}}_r^S$ abhängiges Streuspannungsglied hinzu, das störend in Erscheinung tritt, wenn auch um eine Größenordnung weniger. Wenn nötig, kann man diese Streuspannungen, da man ja die Frequenz $\dot{\hat{\varphi}}_r^S$ kennt, durch entsprechende Stromaufschaltungen auf den Spannungsvektor $\hat{u}_S^{\varphi}$ kompensieren.

Das beschriebene Verfahren ist für eine Asynchronmaschine 10 konzipiert und erprobt; es erscheint aber auch für Synchronmaschinen geeignet, sofern eine niederohmig abgeschlossene Rotorwicklung, sei es nun als Dämpfer- oder als Erregerwicklung, vorhanden ist, denn der dem Verfahren zugrundeliegende Effekt betrifft die Stromübertragung von einer Primärwicklung in eine niederohmige Sekundärwicklung einer Drehfeldmaschine.

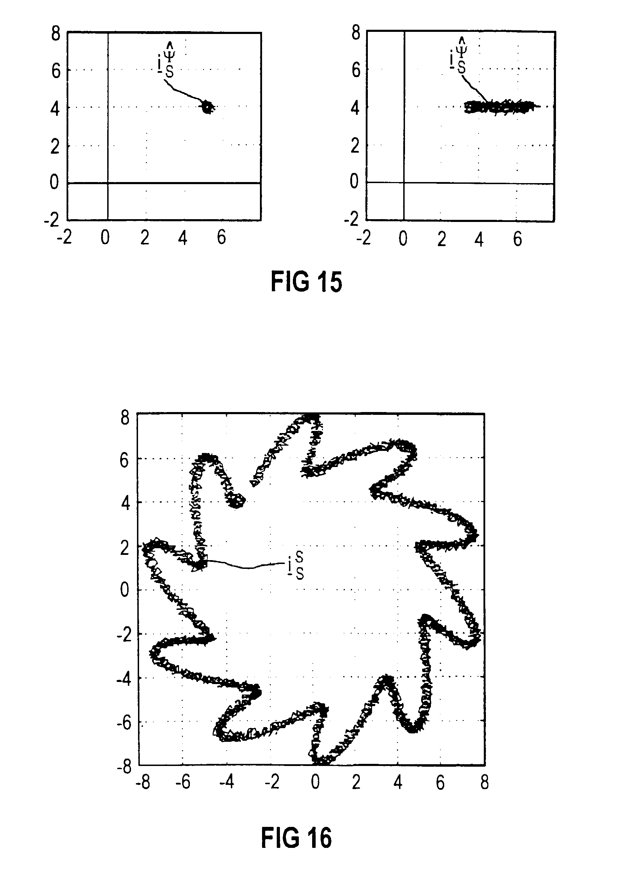

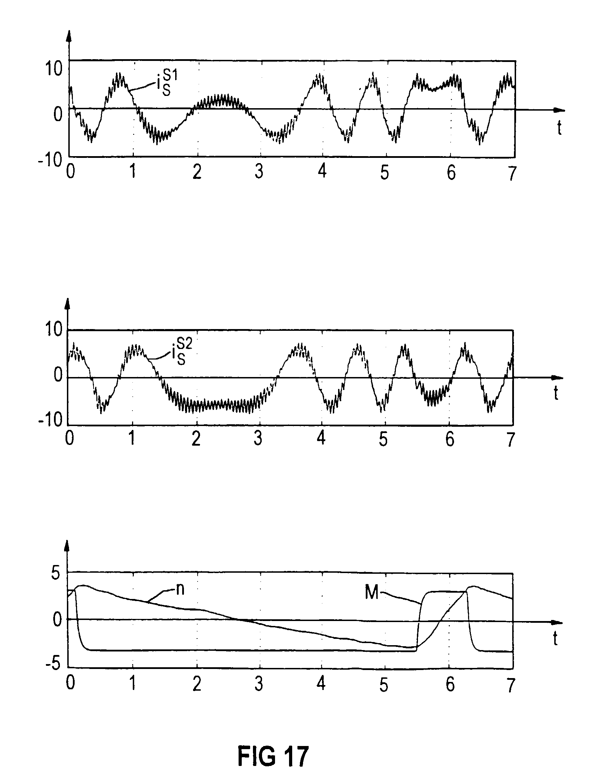

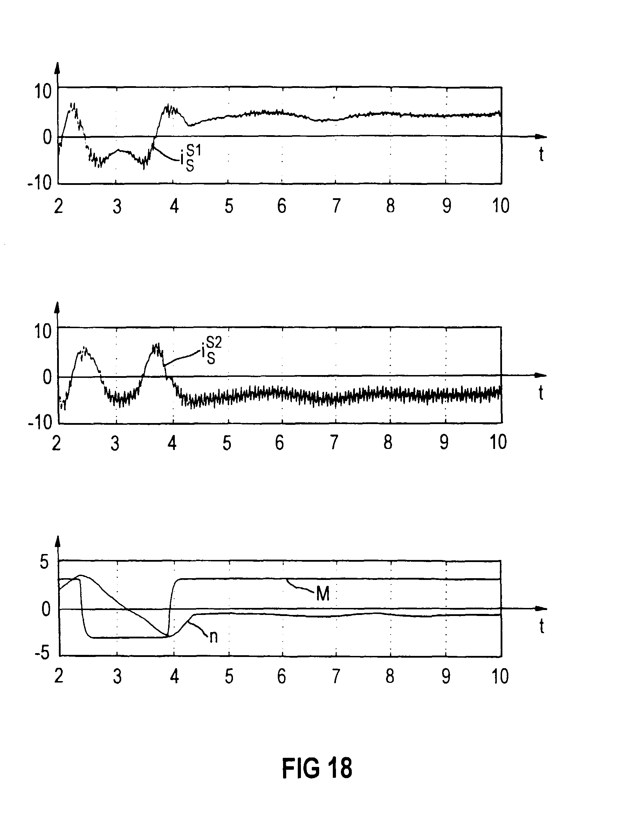

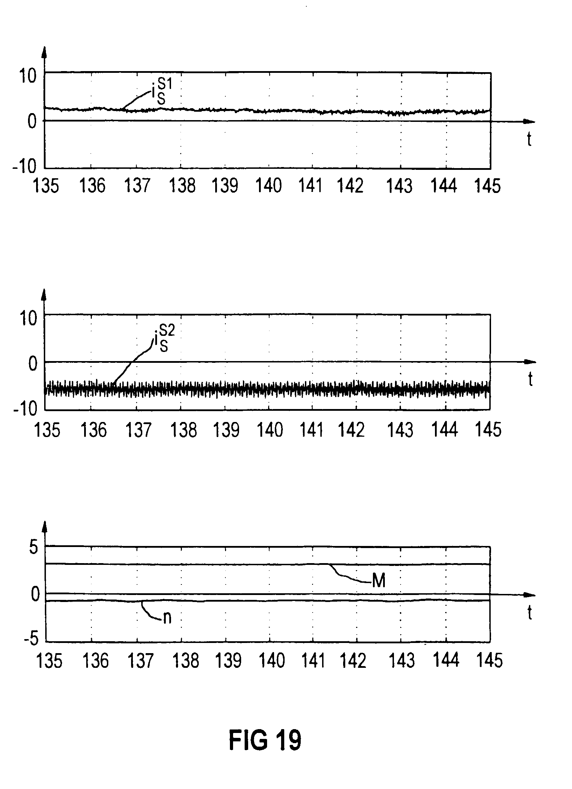

Das Verfahren wurde an einer 25 kW-Asynchronmaschine erprobt, die von einem Pulsumrichter gespeist und mit einer Hysterese-Stromregelung ausgestattet wurde. Die Figur 15 zeigt den Statorstromvektor $i_S$ im Rotorfluß-Koordinatensystem bei Belastung im Sättigungsbereich, und zwar links ohne und rechts mit Statorstrom-Testschwingungsanregung. Man erkennt an dieser Figur, daß die Statorstrom-Testbewegung, insbesondere die Stromistwerte, parallel zum Rotorfluß verlaufen und daher keinen Einfluß auf das elektrische Drehmoment ausüben können. Dies ist als positive Eigenschaft des beschriebenen Verfahrens zu werten. In der Figur 16 ist der zur Figur 15, rechtes Bild, gehörige Statorstromvektor $i_S$ während des Testbetriebes im Statorkoordinatensystem dargestellt. Als Testfrequenz erwies sich eine Frequenz von 20 Hz als groß genug, um die Richtigkeit der dem Verfahren zugrundeliegenden Beziehungen gemäß Figur 1 bzw. Gleichung (6) nicht zu beeinträchtigen. Zur Bestätigung der einwandfreien Funktion des Verfahrens im kleinen Frequenzbereich wurde ein Reversierbetrieb mit ±80 % des Nennmomentes zwischen den Drehzahlen von +3 % und -3 % gefahren. In Figur 17 wird dabei ein beschleunigendes Lastmoment vorgegeben, welches den Aufwärtslauf stark verzögert. Der Drehmomentverlauf und der Drehzahlverlauf sind in dieser Figur 17 im unteren Diagramm deutlich zu erkennen; die Zeit wird in Sekunden gezählt. In den oberen beiden Diagrammen dieser Figur 17 sind die Statorwicklungsströme $i_S^{S1}$ und $i_2^{S2}$ inklusive Testschwingung dargestellt. In den Figuren 18 und 19 wird ein Lastbetrieb bei Frequenz Null demonstriert. Während eines Reversiervorganges wird etwa bei t=4,3 ein Lastmoment zugeschaltet, das jede weitere Beschleunigung verhindert, so daß die belastete Maschine 10 bei Frequenz Null verharrt. Diese Zuschaltung wird über längere Zeit beibehalten, um die Stabilität einer solchen Belastung zu demonstrieren. Der Zustand "Frequenz Null" ist an den nun entstehenden Phasen-Gleichenströmen einwandfrei zu erkennen, die in den beiden oberen Diagrammen der Figur 18 abgebildet sind.

In diesem Betriebspunkt versagte bisher jedes Maschinenmodell, da bei Frequenz Null normalerweise keinerlei Information über den Rotorfluß $\Psi_r$ in der Statorspannung $\underline{u}_S$ enthalten ist. Durch das hier beschriebene Verfahren wird aber in diesem Betriebspunkt gewissermaßen künstlich eine Flußinformation geschaffen, die, wie gezeigt wurde, ausreicht, um einen einwandfreien feldorientierten Betrieb zu ermöglichen.

**Patentansprüche**

1. Verfahren zur Korrektur einer Flußrichtung ($\hat{\varphi}_r^S$) eines mittels eines Maschinenmodells (46) in Abhängigkeit zweier Zustandsvektoren ($\underline{i}_S$, $\underline{u}_S$) einer geberlosen, feldorientiert betriebenen Drehfeldmaschine (10) gebildeten Modellflußvektors ($\Psi_r$) bis zur Frequenz Null, wobei

   a) je ein Sollwert für eine feld- und drehmomentbildende Stromkomponente ($i_S^{\Psi 1**}$, $i_S^{\Psi 2**}$) des Ständerstromvektors ($\underline{i}_S$) der Drehfeldmaschine (10) vorgegeben wird,

   b) dem Sollwert für die feldbildende Stromkomponente ($i_S^{\Psi 1*}$) ein Stromtestsignal ($[\Delta i_S]_T$) mit zeitlich nicht konstantem Verlauf aufgeschaltet wird, **dadurch gekennzeichnet,** daß

   c) die feldbildende Stromkomponente ($i_S^{\Psi 1**}$) derart angehoben wird, daß die Drehfeldmaschine (10) im Sättigungsbereich betrieben wird,

   d) der zeitliche Verlauf der Spannungskomponenten ($u_S^{S1}$, $u_S^{S2}$) des Ständerspannungsvektors ($\underline{u}_S$) der Drehfeldmaschine (10) erfaßt und in flußorientierte Spannungskomponenten ($u_S^{\hat{\Psi} 1}$, $u_S^{\hat{\Psi} 2}$) gewandelt werden,

   e) aus diesen flußorientierten Spannungskomponenten ($u_S^{\hat{\Psi} 1}$, $u_S^{\hat{\Psi} 2}$) Spannungskomponenten ($\Delta u_S^{\hat{\Psi} 1}$, $\Delta u_S^{\hat{\Psi} 2}$) die nur mehr Anteile mit zeitlich nicht konstantem Verlauf enthalten, herausgebildet werden,

   f) Komponenten ($d^{a1}$, $d^{a2}$) eines Korrelationsvektors ($\underline{d}^a$) aus dem zeitlichen Verlauf einer aus dem Stromtestsignals ($[\Delta i_S]_T$) abgeleiteten Größe und der bestimmten Spannungskomponenten ($\Delta u_S^{\hat{\Psi} 1}$, $\Delta u_S^{\hat{\Psi} 2}$) bestimmt werden und daß

   g) die Flußrichtung ($\hat{\varphi}_r^S$) des nachgebildeten Modellflußvektors ($\hat{\underline{\Psi}}_r$) von der achssenkrechten Komponente ($d^{a2}$) des Korrelationsvektors ($\underline{d}^a$) nachgeführt wird, bis die achssenkrechte Komponente ($d^{a2}$) des Korrelationsvektors ($\underline{d}^a$) zu Null wird.

2. Verfahren nach Anspruch 1, **dadurch gekennzeichnet**, daß als Stromtestsignal ($[\Delta i_S]_T$) eine cos-förmige Schwingung von der Form

$$\left[\Delta i_S\right]_T = a \cdot \cos \dot{\alpha}^{\hat{\Psi}} t$$

verwendet wird.

3. Verfahren nach Anspruch 1, **dadurch gekennzeichnet,** daß zur Erzeugung der Komponenten ($d^{a1}$, $d^{a2}$) des Korrelationsvektors ($\underline{d}^a$) die Spannungskomponenten ($\Delta u_S^{\hat{\Psi} 1}$, $\Delta u_S^{\hat{\Psi} 2}$) mit zeitlich nicht konstantem Verlauf jeweils in eine a-Achse eines Testleitvektors ($\underline{a}$) und eine a'-Achse eines an der Flußrichtung ($\hat{\varphi}_r^S$) gespiegelten Testleitvektors ($\underline{a}'$) transformiert werden mit anschließender Filterung und daß diese generierten Vektoren ($\underline{f}^a$, $\underline{g}^a$) komponentenweise addiert werden, wobei die Summe der achssenkrechten Komponenten ($f^{a2}$, $g^{a'2}$) die senkrechte Komponente ($d^{a2}$) des Korrelationsvektors ($\underline{d}^a$) bildet.

4. Vorrichtung zur Durchführung des Verfahrens nach Anspruch 1 mit

   a) einem Stellglied (38) für den Ständerstrom ($\underline{i}_S$) einer geberlosen Drehfeldmaschine (10)

   b) einem Maschinenmodell (46), an dessen Eingängen die kartesischen Komponenten ($i_S^{S1}$, $i_S^{S2}$, $u_S^{S1}$, $u_S^{S2}$) der Zustandsvektoren ($\underline{i}_S$, $\underline{u}_S$) der Drehfeldmaschine (10) anstehen,

   c) einer dem Ständerstrom-Stellglied (38) vorgeschalteten Steuereinrichtung (36), an deren Eingängen die Sollwerte für die fluß- und drehmomentbildende Stromkomponente ($i_S^{\Psi 1*}$, $i_S^{\Psi 2*}$) anstehen,

   d) einem Generator (52) zur Erzeugung eines Stromtestsignals ($[\Delta i_S]_T$) mit zeitlich nicht konstantem Verlauf, **dadurch gekennzeichnet,** daß

   e) eine Stromanhebeeinrichtung (58) zur Anhebung des Sollwertes der feldbildenden Stromkomponente

($i_S^{\Psi 1**}$) vorgesehen ist,

f) eine einem Koordinatenwandler (66) für die Ständerspannungen ($u_R$, $u_S$, $u_T$) der Drehfeldmaschine (10) nachgeschaltete Einrichtung (62) zur Erzeugung von Spannungskomponenten ($\Delta u_S^{\hat{\Psi}1}$, $\Delta u_S^{\hat{\Psi}2}$) mit zeitlich nicht konstantem Verlauf,

g) eine Einrichtung (68) zur Bildung der Komponenten ($d^{a1}$, $d^{a2}$) eines Korrelationsvektors ($\underline{d}^a$) der Einrichtung (62) zur Erzeugung der Spannungskomponenten ($\Delta u_S^{\hat{\Psi}1}$, $\Delta u_S^{\hat{\Psi}2}$) nachgeschaltet ist und daß

h) ein Ausgang einer Einrichtung (68) zur Bildung eines Korrelationsvektors ($\underline{d}^a$), an dem die achssenkrechte Komponente ($d^{a2}$) ansteht, über eine Nachführung (70) mit dem Maschinenmodell (46) verbunden ist.

5. Vorrichtung nach Anspruch 4, **dadurch gekennzeichnet,** daß die Stromanhebevorrichtung (58) eine Einrichtung (60) zur Spannungsteilung und einen Schalter (S2) aufweist, der eingangsseitig mit dem Ausgang der Einrichtung (60) und ausgangsseitig mit einem Addierglied (56) verbunden ist.

6. Vorrichtung nach Anspruch 4, **dadurch gekennzeichnet,** daß der Generator (52) zur Erzeugung eines Stromtestsignals ($[\Delta i_S]_T$) einen Winkelintegrator (22), einen Vektordreher (24) und zwei Einrichtungen zur Spannungsteilung aufweist, wobei die eine Einrichtung ausgangsseitig mit dem Winkelintegrator (22), der ausgangsseitig mit einem Winkeleingang des Vektordrehers (24) verbunden ist, und die andere Einrichtung ausgangsseitig mit einem Signaleingang des Vektordrehers (24) verbunden ist, wobei ein zweiter Signaleingang mit Null verbunden ist.

7. Vorrichtung nach Anspruch 4, **dadurch gekennzeichnet,** daß die Einrichtung (62) zur Erzeugung von Spannungskomponenten ($\Delta u_S^{\hat{\Psi}1}$, $\Delta u_S^{\hat{\Psi}2}$) aus einer Reihenschaltung eines Vektordrehers (72) und eines Filters (74) besteht.

8. Vorrichtung nach Anspruch 4, **dadurch gekennzeichnet,** daß die Einrichtung (68) zur Bildung des Korrelationsvektors ($\underline{d}^a$) aus zwei Reihenschaltungen (76, 78) eines Vektordrehers (80,82) und eines Filters (84,86) besteht, wobei die Ausgänge der beiden Filter (84,86) komponentenweise jeweils mit einem Addierer (88,90) verknüpft sind, deren Ausgänge die Ausgänge der Einrichtung (68) bilden.

9. Vorrichtung nach Anspruch 4, **dadurch gekennzeichnet,** daß die Einrichtung (62) zur Erzeugung der Spannungskomponenten ($\Delta u_S^{\hat{\Psi}1}$, $\Delta u_S^{\hat{\Psi}2}$), die Einrichtung (68) zur Bildung der Komponenten ($d^{a1}$, $d^{a2}$) des Korrelationsvektors ($\underline{d}^a$), die Nachführung (70) und das Maschinenmodell (46) eine Baueinheit bildet.

10. Vorrichtung nach Anspruch 9, **dadurch gekennzeichnet,** daß als Baueinheit ein Mikroprozessor vorgesehen ist.

**Claims**

1. Method for the correction of a flux direction ($\hat{\varphi}_r^S$) of a model flux vector ($\hat{\underline{\Psi}}_r$) to zero frequency, the model flux vector being formed by means of a machine model (46) as a function of two state vectors ($\underline{i}_S$, $\underline{u}_S$) of a sensor-free polyphase machine (10) operated in a field-oriented manner, wherein

a) a respective desired value is specified for a field-forming and torque-forming current component ($i_S^{\Psi 1*}$, $i_S^{\Psi 2*}$) of the stator current vector ($\underline{i}_S$) of the polyphase machine (10),

b) a current test signal ($[\Delta i_S]_T$) with a non-constant characteristic with respect to time is applied to the desired value for the field-forming current component ($i_S^{\Psi 1*}$), characterized in that

c) the field-forming current component ($i_S^{\Psi 1**}$) is raised in such a way that the polyphase machine (10) is operated in the saturation region,

d) the time characteristic of the voltage components ($u_S^{S1}$, $u_S^{S2}$) of the stator voltage vector ($\underline{u}_S$) of the polyphase machine (10) is detected and converted into flux-oriented voltage components ($u_S^{\hat{\Psi}1}$, $u_S^{\hat{\Psi}2}$),

e) from these flux-oriented voltage components ($u_S^{\hat{\Psi}1}$, $u_S^{\hat{\Psi}2}$), voltage components ($\Delta u_S^{\hat{\Psi}1}$, $\Delta u_S^{\hat{\Psi}2}$), are derived which only contain parts with a non-constant characteristic with respect to time,

f) components ($d^{a1}$, $d^{a2}$) of a correlation vector ($\underline{d}^a$) are determined from the time characteristic of a variable derived from the current test signal ($[\Delta i_S]_T$) and the determined voltage components ($\Delta u_S^{\hat{\Psi}1}$, $\Delta u_S^{\hat{\Psi}2}$), and in that

g) the flux direction ($\varphi_r^S$) of the simulated model flux vector ($\underline{\Psi}_r$) is readjusted by the axially perpendicular component ($d^{a2}$) of the correlation vector ($\underline{d}^a$) until the axially perpendicular component ($d^{a2}$) of the correlation vector ($\underline{d}^a$) becomes zero.

2. Method according to claim 1, characterized in that as current test signal ($[\Delta i_S]_T$) a cos-shaped oscillation of the form

$$[\Delta i_S]_T = a \cdot \cos \alpha^{\dot{\Psi}} \, t$$

is used.

3. Method according to claim 1, characterized in that to generate the components ($d^{a1}$, $d^{a2}$) of the correlation vector ($\underline{d}^a$) the voltage components ($\Delta u_s^{\dot{\Psi}1}$, $\Delta u_s^{\dot{\Psi}2}$) are transformed with a non-constant characteristic with respect to time in each case into an a-axis of a test guide vector ($\underline{a}$) and an a'-axis of a test guide vector ($\underline{a}'$) reflected at the flux direction ($\hat{\varphi}_r^S$) with subsequent filtering, and in that these generated vectors ($\underline{f}^a$, $\underline{g}^a$) are added component-wise, with the sum of the axially perpendicular components ($f^{a2}$, $g^{a'2}$) forming the perpendicular component ($d^{a2}$) of the correlation vector ($\underline{d}^a$).

4. Apparatus for carrying out the method according to claim 1, with

    a) an actuator (38) for the stator current ($i_S$) of a sensor-free polyphase machine (10)

    b) a machine model (46), at the inputs of which the cartesian components ($i_S^{S1}$, $i_S^{S2}$, $u_S^{S1}$, $u_S^{S2}$) of the state vectors (($\underline{i}_S$, $\underline{u}_S$) of the polyphase machine (10) are present,

    c) a control device (36) connected upstream of the stator current actuator (38), at the inputs of which control device the desired values for the flux-forming and torque-forming current component ($i_S^{\Psi1*}$, $i_S^{\Psi2*}$) are present,

    d) a generator (52) for generating a current test signal ($[\Delta i_S]_T$) with a non-constant characteristic with respect to time, characterized in that

    e) a current raising device (58) for raising the desired value of the field-forming current component ($i_S^{\Psi1**}$) is provided,

    f) a device (62) for generating voltage components ($\Delta u_s^{\dot{\Psi}1}$, $\Delta u_s^{\dot{\Psi}2}$) with a non-constant characteristic with respect to time, which device is connected downstream of a coordinate transformer (66) for the stator voltages ($u_R$, $u_S$, $u_T$) of the polyphase machine (10),

    g) a device (68) for forming the components ($d^{a1}$, $d^{a2}$) of a correlation vector ($\underline{d}^a$) is connected downstream of the device (62) for generating the voltage components ($\Delta u_s^{\dot{\Psi}1}$, $\Delta u_s^{\dot{\Psi}2}$), and in that

    h) an output of a device (68) for forming a correlation vector ($\underline{d}^a$), at which the axially perpendicular component ($d^{a2}$) is present, is connected by way of adjusting means (70) to the machine model (46).

5. Apparatus according to claim 4, characterized in that the current raising device (58) has a device (60) for voltage division and a switch (S2) which is connected on the input side to the output of the device (60) and on the output side to an adding element (56).

6. Apparatus according to claim 4, characterized in that the generator (52) for generating a current test signal ($[\Delta i_S]_T$) has an angle integrator (22), a vector rotator (24) and two devices for voltage division, wherein the one device is connected on the output side to the angle integrator (22), which is connected on the output side to an angle input of the vector rotator (24), and the other device is connected on the output side to a signal input of the vector rotator (24), wherein a second signal input is connected to zero.

7. Apparatus according to claim 4, characterized in that the device (62) for generating voltage components ($\Delta u_s^{\dot{\Psi}1}$, $\Delta u_s^{\dot{\Psi}2}$) consists of a series circuit of a vector rotator (72) and a filter (74).

8. Apparatus according to claim 4, characterized in that the device (68) for forming the correlation vector ($\underline{d}^a$) consists of two series circuits (76, 78) of a vector rotator (80, 82) and a filter (84, 86), wherein the outputs of the two filters (84, 86) are linked component-wise to a respective adder (88, 90), the outputs of which form the outputs of the device (68).

9. Apparatus according to claim 4, characterized in that the device (62) for generating the voltage components ($\Delta u_s^{\dot{\Psi}1}$, $\Delta u_s^{\dot{\Psi}2}$), the device (68) for forming the components ($d^{a1}$, $d^{a2}$) of the correlation vector ($\underline{d}^a$), the adjusting means (70) and the machine model (46) form a physical unit.

10. Device according to claim 9, characterized in that a microprocessor is provided as physical unit.

**Revendications**

1. Procédé pour la correction d'une direction de flux ($\hat{\varphi}_r^S$) d'un vecteur de flux de modèle ($\hat{\Psi}_r$), formé au moyen d'un modèle de moteur (46) en fonction de deux vecteurs d'état ($\underline{i}_S$, $\underline{u}_S$) d'un moteur à champ rotatif (10) commandé sans capteur et par orientation de champ, jusqu'à la fréquence nulle,

   a) dans lequel on prescrit chaque fois une valeur de consigne pour une composante de courant ($i_S^{\Psi 1*}$, $i_S^{\Psi 2*}$), formant respectivement le champ et le couple, du vecteur de courant de stator ($\underline{i}_S$) du moteur à champ rotatif (10),
   b) on applique sur la valeur de consigne pour la composante de courant ($i_S^{\Psi 1*}$) formant le champ un signal de test de courant ($[\Delta i_S]_T$) ayant une allure non constante dans le temps,

   caractérisé par le fait

   c) qu'on augmente la composante de courant formant le champ ($i_S^{\Psi 1**}$) de telle sorte que le moteur à champ rotatif (10) est commandé dans le domaine de saturation,
   d) qu'on détecte l'allure temporelle des composantes de tension ($u_S^{S1}$, $u_S^{S2}$) du vecteur de tension de stator ($\underline{u}_S$) du moteur à champ rotatif (10) et on les transforme en composantes de tension ($u_S^{\hat{\Psi}1}$, $u_S^{\hat{\Psi}2}$) avec orientation de flux,
   e) que, à partir de ces composantes de tension ($u_S^{\hat{\Psi}1}$, $u_S^{\hat{\Psi}2}$) avec orientation de flux, on forme des composantes de tension ($\Delta u_S^{\hat{\Psi}1}$, $\Delta u_S^{\hat{\Psi}2}$) qui contiennent seulement plus de parties ayant une allure non constante dans le temps,
   f) qu'on détermine des composantes ($d^{a1}$, $d^{a2}$) d'un vecteur de corrélation ($\underline{d}^a$) à partir de l'allure temporelle d'une grandeur déduite du signal de test de courant ($[\Delta i_S]_T$) et à partir des composantes de tension déterminées ($\Delta u_S^{\hat{\Psi}1}$, $\Delta u_S^{\hat{\Psi}2}$), et
   g) qu'on poursuit la direction de flux ($\hat{\varphi}_r^S$) du vecteur de flux de modèle reproduit ($\hat{\underline{\Psi}}_r$) avec la composante perpendiculaire à l'axe ($d^{a2}$) du vecteur de corrélation ($\underline{d}^a$) jusqu'à ce que la composante perpendiculaire à l'axe ($d^{a2}$) du vecteur de corrélation ($\underline{d}^a$) soit nulle.

2. Procédé selon la revendication 1, caractérisé par le fait que l'on utilise comme signal de test de courant ($[\Delta i_S]_T$) une oscillation en forme de cosinus de la forme :

$$[\Delta i_S]_T = a \cdot \cos \overset{\bullet}{\underset{\alpha}{\hat{\Psi}}} t.$$

3. Procédé selon la revendication 1, caractérisé par le fait que, pour produire les composantes ($d^{a1}$, $d^{a2}$) du vecteur de corrélation ($\underline{d}^a$), on transforme les composantes de tension ($\Delta u_S^{\hat{\Psi}1}$, $\Delta u_S^{\hat{\Psi}2}$) ayant une allure non constante dans le temps chaque fois selon un axe-a d'un vecteur directeur de test ($\underline{a}$) et selon un axe-a' d'un vecteur directeur de test ($\underline{a}'$) réfléchi selon la direction de flux ($\hat{\varphi}_r^S$), un filtrage étant effectué ensuite, et on additionne ces vecteurs produits ($\underline{f}^a$, $\underline{g}^a$) composante par composante, la somme des composantes perpendiculaires à l'axe ($f^{a2}$, $g^{a'2}$) formant la composante perpendiculaire à l'axe ($d^{a2}$) du vecteur de corrélation ($\underline{d}^a$).

4. Dispositif pour la mise en oeuvre du procédé selon la revendication 1, comportant

   a) un élément de réglage (38) pour le courant de stator ($\underline{i}_S$) d'un moteur à champ rotatif (10) commandé sans capteur,
   b) un modèle de moteur (46) aux entrées duquel se trouvent les composantes cartésiennes ($i_S^{S1}$, $i_S^{S2}$, $u_S^{S1}$, $u_S^{S2}$) des vecteurs d'état ($\underline{i}_S$, $\underline{u}_S$) du moteur à champ rotatif (10),
   c) un dispositif de commande (36) qui est branché du côté amont de l'élément de réglage de courant de stator (38) et aux entrées duquel se trouvent les valeurs de consigne pour les composantes de courant ($i_S^{\Psi 1*}$, $i_S^{\Psi 2*}$) formant le flux et formant le couple,
   d) un générateur (52) pour produire un signal de test de courant ($[\Delta i_S]_T$) ayant une allure non constante dans le temps,

   caractérisé par le fait

   e) qu'un dispositif d'augmentation de courant (58) est prévu pour augmenter la valeur de consigne de la composante de courant ($i_S^{\Psi 1**}$) formant le champ,

f) qu'un dispositif (62) branché du côté aval d'un convertisseur de coordonnées (66) pour les tensions de stator ($u_R$, $u_S$, $u_T$) du moteur à champ rotatif (10) est prévu pour produire des composantes de tension ($\Delta u_s^{\hat{\psi}1}$, $\Delta u_s^{\hat{\psi}2}$) ayant une allure non constante dans le temps,

g) qu'un dispositif (68) destiné à la formation des composantes ($d^{a1}$, $d^{a2}$) d'un vecteur de corrélation ($\underline{d}^a$) est branché du côté aval du dispositif (62) destiné à produire les composantes de tension ($\Delta u_s^{\hat{\psi}1}$, $\Delta u_s^{\hat{\psi}2}$), et

h) qu'une sortie d'un dispositif (68) destiné à la formation d'un vecteur de corrélation ($\underline{d}^a$), sortie à laquelle se trouve la composante ($d^{a2}$) perpendiculaire à l'axe, est reliée par l'intermédiaire d'un dispositif de poursuite (70) au modèle de moteur (46).

**5.** Dispositif selon la revendication 4, caractérisé par le fait que le dispositif d'augmentation de courant (58) comporte un dispositif (60) qui est destiné à la division de tension et un interrupteur (S2) qui est relié en entrée à la sortie du dispositif (60) et en sortie à un élément additionneur (56).

**6.** Dispositif selon la revendication 4, caractérisé par le fait que le générateur (52) destiné à produire un signal de test de courant ($[\Delta i_S]_T$) comporte un intégrateur d'angle (22), un dispositif de rotation de vecteur (24) et deux dispositifs pour la division de tension, l'un des dispositifs étant relié en sortie à l'intégrateur d'angle (22) qui est relié en sortie à une entrée d'angle du dispositif de rotation de vecteur (24) et l'autre dispositif étant relié en sortie à une entrée de signal du dispositif de rotation de vecteur (24), une deuxième entrée de signal étant reliée à zéro.

**7.** Dispositif selon la revendication 4, caractérisé par le fait que le dispositif (62) destiné à produire des composantes de tension ($\Delta u_s^{\hat{\psi}1}$, $\Delta u_s^{\hat{\psi}2}$) est constitué d'un circuit série formé d'un dispositif de rotation de vecteur (72) et d'un filtre (74).

**8.** Dispositif selon la revendication 4, caractérisé par le fait que le dispositif (68) destiné à la formation du vecteur de corrélation ($\underline{d}^a$) est constitué de deux circuits série (76, 78) d'un dispositif de rotation de vecteur (80, 82) et d'un filtre (84, 86), les sorties des deux filtres (84, 86) étant combinées composante par composante chaque fois avec un additionneur (88, 90) dont les sorties forment les sorties du dispositif (68).

**9.** Dispositif selon la revendication 4, caractérisé par le fait que le dispositif (62) destiné à produire les composantes de tension ($\Delta u_s^{\hat{\psi}1}$, $\Delta u_s^{\hat{\psi}2}$), le dispositif (68) destiné à former les composantes ($d^{a1}$, $d^{a2}$) du vecteur de corrélation ($\underline{d}^a$), le dispositif de poursuite (70) et le modèle de moteur (46) forment une unité modulaire.

**10.** Dispositif selon la revendication 9, caractérisé par le fait qu'un microprocesseur est prévu comme unité modulaire.

$$\Delta \underline{i}_S^S \qquad \Delta \underline{i}_S^\Psi \qquad -\Delta \underline{i}_r^\Psi \qquad -\Delta \underline{i}_r^S$$

**2**                        **4**

$\Delta i_S^{S1} \longrightarrow$ [VD] $\Delta i_S^{\Psi1} \longrightarrow (e_{11}) \longrightarrow -\Delta i_r^{\Psi1}$ [VD] $\longrightarrow -\Delta i_r^{S1}$

$\Delta i_S^{S2} \longrightarrow$   $\Delta i_S^{\Psi2} \longrightarrow (e_{22}) \longrightarrow -\Delta i_r^{\Psi2}$   $\longrightarrow -\Delta i_r^{S2}$

$\varphi_r^S$

## FIG 1

$f^{a1} \qquad \underline{a}\text{-Achse}$

1)     2)     $f^{a2}$     $\underline{f}^a$

## FIG 12

FIG 2

FIG 3

16

FIG 4

FIG 5

FIG 6

19

FIG 7

FIG 8

FIG 9

EP 0 847 617 B1

FIG 10

FIG 11

FIG 13

FIG 14

**FIG 15**

**FIG 16**

**FIG 17**

**FIG 18**

**FIG 19**